# EUROPEAN PATENT APPLICATION

(11) **EP 4 842 021 A1**
(43) Date of publication of application: **18.11.2026**
(21) Application number: 24916142.3
(22) Date of filing: 14.01.2024
(51) Int. Cl.: H04W 4/80, H04L 67/12, H04W 4/50

(54) **INFORMATION EXCHANGE METHOD, FIRST NETWORK ELEMENT, TERMINAL, COMMUNICATION DEVICE, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); GONG, Yubing, Beijing 100085 (CN)
(74) Representative: Stöckeler, Ferdinand
(86) International application number: PCT/CN2024/072213
(87) International publication number: WO 2025/148078

(57) **Abstract**

The present disclosure relates to an information exchange method, a first network element, a terminal, a communication device, and a storage medium. The method comprises: a first network element or a server terminal sends first information to a first terminal, wherein the first information is used for exchanging service information of the first terminal with the first terminal, and the first information is further used for instructing the first terminal to exchange service information with at least one second terminal, or instructing the first terminal to transparently forward the service information to the at least one second terminal. Therefore, service information of a terminal that is not connected to a network element is effectively transmitted.

## Description

### TECHNICAL FIELD

The disclosure relates to the field of communication technology, and in particular, to an information exchange method, a first network element, a terminal, a communication device, and a storage medium.

### BACKGROUND

To support direct communication between terminals, a sidelink (SL) communication mode is introduced. Ranging refers to determining a distance between two or more terminals or a direction of one terminal relative to another terminal via a PC5 interface. The PC5 interface denotes a communication interface between terminals, such as a short-range direct communication interface among vehicles, pedestrians and road infrastructure. SL positioning means estimating a location of a terminal to be positioned based on the SL. For example, ranging or SL positioning may be performed on a target user equipment (target UE) based on information of a located UE. In addition, SL reference UEs (located UEs) whose locations are known or obtainable during ranging or SL positioning may be used to assist in positioning the target UE. As another example, ranging or SL positioning may be adopted to determine relative location information between a target UE and an SL reference UE.

### SUMMARY

Embodiments of the disclosure provide an information exchange method, a first network element, a terminal, a communication device, a chip system, a storage medium, a computer program and a computer program product, which may be applied to the field of communication technologies to solve the technical problem that service information of a terminal not connected to a network element cannot be effectively transmitted in the related art.

The disclosure provides an information exchange method, a first network element, a terminal, a communication device and a storage medium.

According to a first aspect of the embodiments of the disclosure, an information exchange method is provided, which is executed by a first network element or a server terminal. The method includes: transmitting first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal.

According to a second aspect of the embodiments of the disclosure, an information exchange method is provided, which is executed by a second terminal. The method includes: transmitting fourth information to a first terminal, in which the fourth information is configured to instruct the first terminal to exchange service information of the second terminal with a first network element or a server terminal, or instruct the first terminal to transparently forward the service information of the second terminal to the first network element or the server terminal.

According to a third aspect of the embodiments of the disclosure, an information exchange method is provided, which is executed by a first terminal. The method includes: receiving first information transmitted by a first network element or a server terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal.

According to a fourth aspect of the embodiments of the disclosure, an information exchange method is provided, which is executed by a first terminal. The method includes: receiving fourth information transmitted by a second terminal, in which the fourth information is configured to instruct the first terminal to exchange service information of the second terminal with a first network element or a server terminal, or instruct the first terminal to transparently forward the service information of the second terminal to the first network element or the server terminal.

According to a fifth aspect of the embodiments of the disclosure, an information exchange method is provided. The method includes: a first network element or a server terminal transmits first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal; and the first terminal receives the first information transmitted by the first network element or the server terminal

According to a sixth aspect of the embodiments of the disclosure, an information exchange method is provided. The method includes: a second terminal transmits fourth information to a first terminal, in which the fourth information is configured to instruct the first terminal to exchange service information of the second terminal with a first network element or a server terminal, or instruct the first terminal to transparently forward the service information of the second terminal to the first network element or the server terminal; and the first terminal receives the fourth information transmitted by the second terminal.

According to a seventh aspect of the embodiments of the disclosure, a first network element is provided. The first network element includes a transceiving module configured to transmit first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal.

According to an eighth aspect of the embodiments of the disclosure, a terminal is provided. The terminal includes a transceiving module configured to: transmit first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal; or transmit fourth information to a first terminal, in which the fourth information is configured to instruct the first terminal to exchange service information of a second terminal with a first network element or a server terminal, or instruct the first terminal to transparently forward the service information of the second terminal to the first network element or the server terminal; or receive the first information transmitted by the first network element or the server terminal; or receive the fourth information transmitted by the second terminal.

According to a ninth aspect of the embodiments of the disclosure, a communication device is provided. The communication device includes one or more processors, where the one or more processors are configured to invoke instructions to cause the communication device to execute the information exchange method according to any one of the first aspect to the sixth aspect.

According to a tenth aspect of the embodiments of the disclosure, a communication system is provided. The communication system includes a first network element or a server terminal, a second terminal and a first terminal. The first network element or the server terminal is configured to implement the information exchange method according to the first aspect; the second terminal is configured to implement the information exchange method according to the second aspect; and the first terminal is configured to implement the information exchange method according to the third aspect or the fourth aspect.

According to an eleventh aspect of the embodiments of the disclosure, a storage medium is provided. The storage medium stores instructions, where the instructions, when executed on a communication device, cause the communication device to perform the information exchange method according to any one of the first aspect to the sixth aspect.

### BRIEF DESCRIPTION OF THE DRAWINGS

To more clearly illustrate the technical solutions in the embodiments of the disclosure or the background art, the accompanying drawings required for describing the embodiments of the disclosure or the background art are described below.
FIG. 1 is a schematic architectural diagram of a communication system according to an embodiment of the disclosure.
FIG. 2 is a schematic diagram of a sidelink positioning protocol (SLPP) configuration for SL positioning in an embodiment of the disclosure.
FIG. 3A to FIG. 3D are interaction schematic diagrams of an information exchange method according to one embodiment of the disclosure.
FIG. 4A to FIG. 4C are interaction schematic diagrams of an information exchange method according to another embodiment of the disclosure.
FIG. 5A to FIG. 5B are interaction schematic diagrams of an information exchange method according to another embodiment of the disclosure.
FIG. 6A to FIG. 6F are interaction schematic diagrams of an information exchange method according to another embodiment of the disclosure.
FIG. 7A to FIG. 7B are interaction schematic diagrams of an information exchange method according to still another embodiment of the disclosure.
FIG. 8A is a schematic diagram of transmitting a terminal capability in a sidelink mobile originated location request (SL-MO-LR) procedure according to an embodiment of the disclosure.
FIG. 8B is a schematic diagram of transmitting a terminal capability in a sidelink mobile terminated location request (SL-MT-LR) procedure according to an embodiment of the disclosure.
FIG. 9A is a schematic diagram of a first network element according to an embodiment of the disclosure.
FIG. 9B is a schematic diagram of a terminal according to an embodiment of the disclosure.
FIG. 10A is a schematic diagram of a communication device according to an embodiment of the disclosure.
FIG. 10B is a schematic diagram of a chip according to an embodiment of the disclosure.

### DETAILED DESCRIPTION

Embodiments of the disclosure provide an information exchange method and apparatus, a communication device, a communication system, and a storage medium. In some embodiments, the terms "information exchange method", "information processing method", "communication method" and the like may be used interchangeably; the terms "information exchange apparatus", "information processing apparatus", "communication apparatus" and the like may be used interchangeably; and the terms "information processing system", "communication system" and the like may be used interchangeably.

Embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, embodiments may be combined arbitrarily. For example, some or all steps of different embodiments may be combined arbitrarily, and a certain embodiment may be combined arbitrarily with implementations of other embodiments.

In embodiments of the disclosure, unless otherwise specified and without logical conflict, the terms and/or descriptions between embodiments are consistent and may be cross-referenced. Technical features in different embodiments may be combined to form new embodiments according to their inherent logical relationships.

The terms used in embodiments of the disclosure are merely for the purpose of describing specific embodiments and are not intended to limit the disclosure.

In embodiments of the disclosure, unless otherwise stated, elements expressed in the singular form, such as "a", "an", "the", "aforesaid", "said", "foregoing", "this", may denote "one and only one", or "one or more", "at least one", etc. For example, when articles such as "a", "an", and "the" in English are used in translation, the noun following the article may be understood as a singular form or a plural form.

In embodiments of the disclosure, "a plurality of" refers to two or more.

In some embodiments, terms such as "at least one (of)", "one or more", "a plurality of", and "multiple" may be used interchangeably.

In some embodiments, recitations such as "at least one of A, B", "A and/or B", "A in one case and B in another case", "A in response to one case and B in response to another case" may include the following technical solutions as appropriate: in some embodiments, A (performing A independently of B); in some embodiments, B (performing B independently of A); in some embodiments, selectively performing from A and B (A and B are selectively performed); in some embodiments, both A and B (both A and B are performed). The same applies when there are more items such as A, B, C.

In some embodiments, a recitation such as "A or B" may include the following technical solutions as appropriate: in some embodiments, A (performing A independently of B); in some embodiments, B (performing B independently of A); in some embodiments, selectively performing from A and B (A and B are selectively performed). The same applies when there are more items such as A, B, C.

Prefixes such as "first" and "second" in embodiments of the disclosure are merely used to distinguish different description objects and do not limit the position, order, priority, number, or content of the description objects. For the description of the description objects, refer to the description in the claims or the context of embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the number of the description object is not limited by the ordinal number and may be one or more. Taking "the first apparatus" as an example, the number of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an "apparatus" and "device" may be construed as physical or virtual, and its names are not limited to those described in embodiments. In some cases, terms such as "apparatus", "equipment", "device", "circuit", "network element", "node", "function", "unit", "section", "system", "network", "chip", "chip system", "entity" and "subject" are interchangeable.

In some embodiments, the term "network" may be interpreted as an apparatus included in a network (e.g., an access network device, a core network device, etc.).

In some embodiments, the "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", or "bandwidth part (BWP)".

In some embodiments, the "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", or "client".

In some embodiments, acquiring data, information, etc., may comply with the laws and regulations of the country where it is located.

In some embodiments, data, information, etc., may be acquired with the user's consent.

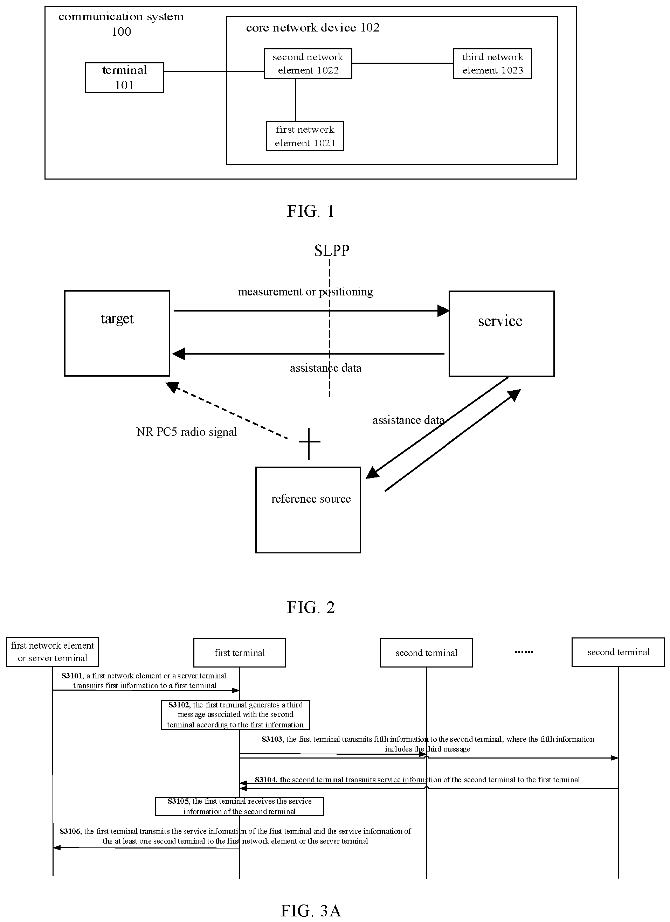

FIG. 1 is a schematic architectural diagram of a communication system according to an embodiment of the disclosure. As shown in FIG. 1, the communication system 100 may include a terminal 101 and a core network device 102.

In some embodiments, the terminal 101 may include at least one of a mobile phone, a wearable device, an Internet of Things (IoT) device, a vehicle with communication functions, an intelligent vehicle, a Pad, a computer with wireless transceiving functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto.

In some embodiments, the core network device 102 may be a single device including a first network element 1021, a second network element 1022, a third network element 1023 and the like, or a plurality of devices or device groups each containing all or part of the first network element 1021, the second network element 1022 and the third network element 1023. A network element may be virtual or physical. A core network (CN) may include at least one of an evolved packet core (EPC), a 5G core network (5GCN), and a next generation core (NGC).

In some embodiments, the first network element 1021 is, for example, a location management function (LMF) network element that provides a positioning service, and is not limited to this name. The LMF network element is deployed on the CN side and configured to provide a location management function service to a terminal. The LMF network element performs overall coordination and resource scheduling for positioning of a terminal registered with the 5GCN or accessing the 5GCN.

In some embodiments, the first network element 1021 is configured to provide a location management function.

In some embodiments, the second network element 1022 is, for example, an access and mobility management function (AMF) network element, and is not limited to this name. The AMF network element is a logical node functional network element on the CN side, serving as a CN control plane access point between a terminal and a radio access network. The AMF network element receives all connection and session related information from a UE, and executes registration, connection, reachability and mobility management. In addition, the AMF network element provides a transmission channel for session management messages between a terminal device and a session management function (SMF) device, and performs an authentication and authorization function during user access.

In some embodiments, the second network element 1022 is configured to provide an access and mobility management function.

In some embodiments, the third network element 1023 is a network element capable of processing an external positioning request, triggering network-initiated positioning, and returning a positioning result to a client that initiates positioning.

In some embodiments, the third network element 1023 is, for example, a gateway mobile location center (GMLC) network element, and is not limited to this name.

In some embodiments, the terminal 101 may be connected to the core network device 102 via an access network device. In some embodiments, the access network device may be a node or device that connects a terminal to a wireless network. The access network device may include at least one of an evolved nodeB (eNB) in a fifth generation (5G) communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, or an access node in a wireless fidelity (Wi-Fi) system, but is not limited thereto.

The communication system described in embodiments of the disclosure is intended to illustrate the technical solutions of embodiments of the disclosure more clearly, and does not constitute a limitation on the technical solutions in embodiments of the disclosure. Those of ordinary skill in the art will appreciate that, with the evolution of system architectures and the emergence of new service scenarios, the technical solutions provided in embodiments of the disclosure are also applicable to similar technical problems.

The following embodiments of the disclosure may be applied to the communication system 100 shown in FIG. 1 or some subjects thereof, but are not limited thereto. The subjects shown in FIG. 1 are exemplary; a communication system may include all or some of the subjects in FIG. 1, and may also include other subjects beyond those in FIG. 1. The number and form of each subject are arbitrary; each subject may be physical or virtual. Connection relationships between the subjects are exemplary. The subjects may or may not be connected to each other, the connection between the subjects may be in any manner, which may be a direct connection or an indirect connection, and may be a wired connection or a wireless connection.

Embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, IoT system, vehicle-to-everything (V2X), systems using other measurement methods, next-generation systems extended based on them, etc. In addition, a plurality of systems may be combined (for example, a combination of LTE or LTE-A and 5G, etc.) for application.

In some embodiments, a target terminal refers to a terminal whose distance, direction and/or location are determined based on ranging or a sidelink (SL) measurement in an SL service with an assistance of one or more SL reference terminals.

In some embodiments, an SL reference terminal refers to a terminal that supports positioning of the target terminal, for example, by transmitting and/or receiving a positioning reference signal via an SL and providing positioning-related information.

In some embodiments, a located terminal is an SL reference terminal whose location is known or obtainable via Uu-based positioning. The located terminal may be configured to determine the location of the target terminal via SL positioning.

In some embodiments, an SL positioning client terminal refers to a third-party terminal other than the SL reference terminal, the target terminal and the located terminal, which initiates a ranging or SL positioning service request on behalf of applications running thereon.

In some embodiments, a server terminal refers to a terminal capable of providing certain services for implementing a service. For example, during implementing the service, the server terminal may distribute service information and/or provide certain service functions. When applied to the ranging/SL positioning service, the server terminal may be an SL positioning server terminal, which may distribute service assistance data and/or provide a location calculation function to compute the location of the target terminal, without limitation thereto.

In some embodiments, in an SL positioning procedure involving the 5GC, the location of the target terminal may be estimated, with an assistance from a network, by using the locations of one or more located terminals as well as the distance and/or direction between the target terminal and the located terminals, or the relative location, distance and direction between the target terminal and one or more SL reference terminals, without limitation thereto.

In some embodiments, a ranging/SL positioning result may include an absolute location, a relative location, a distance and a direction, depending specifically on service requirements. If the target terminal decides to initiate a sidelink mobile originated location request (SL-MO-LR) procedure, the target terminal may carry information of one or more SL reference terminals and/or located terminals in a service request message. If a location services client (LCS client) or an application function (AF) network element intends to obtain ranging/SL positioning results of a group of n terminals (n≥2), namely Terminal 1, Terminal 2, ···, Terminal n, a GMLC may designate a target terminal among the n terminals as well as one or more reference terminals and/or located terminals, and then a sidelink mobile terminated location request (SL-MT-LR) procedure may be adopted.

In some embodiments, a 5GC-MO-LR and 5GC-MT-LR service may be adopted to obtain the absolute location of the target terminal based on SL positioning.

In some embodiments, in terminal positioning procedures involving SL positioning and the 5GC, capabilities of all terminals need to be transmitted to the LMF network element, while only one terminal (e.g., a target terminal with a non-access stratum (NAS) connection) is directly connected to the LMF network element. It should be noted that a terminal connecting to the LMF means the terminal establishes a NAS connection with the network and interacts with the LMF serving the terminal via the AMF. Terminals other than the terminal with the NAS connection interact with the network through the terminal establishes the NAS connection with the network.

In some embodiments, in addition to exchanging terminal capabilities related to ranging/SL positioning, a sidelink positioning protocol (SLPP) supports exchange of assistance data required for ranging/SL positioning, as well as exchange of ranging/SL positioning measurement data and/or results during the ranging/SL positioning procedure. The assistance data is provided by the LMF network element or requested by a terminal and then provided by the LMF network element. The measurement data and/or results are provided by a terminal or requested by the LMF network element and then provided by the terminal. As shown in FIG. 2, FIG. 2 is a schematic diagram of an SLPP configuration for SL positioning according to an embodiment of the disclosure.

Therefore, how to transmit service information of a terminals not connected to a network element remains to be further resolved.

In the embodiments of the disclosure, interaction may be referred to as "exchange". For example, a first terminal exchanging service information of a second terminal with at least one second terminal may include exchanging capability information (exchanging a ranging/SL positioning capability, such as a request capability or a provide capability), exchanging assistance data (exchanging ranging/SL positioning assistance data, such as request assistance data or provide assistance data), or exchanging position measurement information or a position measurement result (exchanging ranging/SL positioning measurement data/result, such as request location information or provide location information). Herein, interaction may mean that the first terminal does not transparently forward a second message from a first network element, a server terminal or a second terminal. Transparent forwarding may mean that the first terminal transparently forwards ("forward transparently", "exchange transparently", "transfer transparently" or "send transparently") the second message from the first network element, the server terminal or the second terminal.

FIG. 3A is an interaction schematic diagram of an information exchange method according to an embodiment of the disclosure. As shown in FIG. 3A, the information exchange method involved in embodiments of the disclosure is applicable to the communication system 100, and the foregoing method includes the following steps.

In step S3101, a first network element or a server terminal transmits first information to a first terminal.

In some embodiments, the first network element may specifically be a LMF network element. The first terminal may be a terminal connected to the first network element, and the second terminal refers to a terminal not connected to the first network element. That the first terminal is connected to the first network element may mean that the first terminal interacts with the first network element via other network-connected devices, or that the first terminal is directly connected to the first network element. If the first network element is an LMF network element, the first terminal being connected with the LMF network element may refer to the first terminal establishing an NAS connection with the network and interacting with the LMF network element serving the terminal via an AMF network element.

The information exchange method in the embodiments of the disclosure may be applied to a ranging/SL positioning service, and may also be applied to any other possible services without limitation.

When the information exchange method is applied to the ranging/SL positioning service, the first terminal may be a target terminal and the second terminal may be a located terminal or an SL reference UE; alternatively, the first terminal may be a located terminal and the second terminal may be an SL reference UE; or the first terminal may be an SL reference UE and the second terminal may be a located terminal, which is not limited herein.

In some embodiments, the first information is configured to exchange service information of the first terminal with the first terminal; the first information is further configured to instruct the first terminal to exchange service information with at least one second terminal, or to instruct the first terminal to transparently forward service information of a corresponding second terminal to at least one second terminal.

In embodiments of the disclosure, an implementation manner of exchanging the service information of the first terminal with the first terminal based on the first information and instructing the first terminal to exchange the service information with at least one second terminal is illustrated. For the implementation manner of requesting to exchange the service information of the first terminal with the first terminal based on the first information and instructing the first terminal to transparently forward the service information of the corresponding second terminal to at least one second terminal, reference may be made to the following embodiments.

In some embodiments, service information includes at least one of: a terminal capability; service auxiliary data; a service measurement result; or a service-associated measurement result. Therefore, the information exchange method in the embodiments of the disclosure may support transmission of various possible service information of a terminal not connected to the first network element or combinations of the various possible service information, and may be effectively adapted to personalized service scenarios.

In embodiments of the disclosure, the first network element or the server terminal may instruct the first terminal to initiate a request to acquire a terminal capability, and/or a service measurement result, and/or a service-associated measurement result of the at least one second terminal.

In some embodiments, an exchange mode for service information of the second terminal may be a first exchange mode or a second exchange mode. The mode with a request initiated by the first terminal or a mode without transparent forwarding by the first terminal may also be referred to as the first exchange mode. For example, upon determining a service information exchange demand of the first network element or the server terminal, the first terminal initiates a request to acquire at least one piece of the following information of the at least one second terminal: the terminal capability, the service measurement result, or the service-associated measurement result. Alternatively, upon determining a service information exchange demand of the second terminal, the first terminal initiates a request to acquire service assistance data of the second terminal from the first network element or the server terminal, and provides the service assistance data to the second terminal.

That is, in the first exchange mode, the first terminal may serve as an initiator for exchanging the service information of the at least one second terminal. If a request for exchanging the service information of the at least one second terminal is initiated by the first network element or the server terminal, the first terminal acts as the initiator to exchange the service information of the at least one second terminal. For example, the service information of the second terminal may be acquired from the second terminal and the acquired service information of the at least one second terminal (such as the terminal capability, the service measurement result, and the service-associated measurement result) is fed back to the first network element or the server terminal; or the service information of the second terminal (such as service assistance data) may be acquired from the first network element or the server terminal and the acquired service information of the second terminal is fed back to the second terminal.

In some embodiments, the service information of the second terminal may also be acquired based on the second exchange mode. The second exchange mode refers, for example, to a request mode in which the first network element or the server terminal initiates a request upon determining a service information exchange demand, so as to instruct the first terminal to transparently forward the service information of the corresponding second terminal to the at least one second terminal. In the second exchange mode, the first terminal is configured to transparently forward messages and information between the first network element and each second terminal, or between the server terminal and each second terminal. For detailed descriptions of the second exchange mode, reference may be made to subsequent embodiments.

In some embodiments, the exchange mode for service information of the second terminal may be determined based on at least one of: indication information from the first terminal, an exchange capability of the first terminal, configuration information of the first network element, or configuration information of the server terminal. This effectively improves a flexibility in determining the exchange mode for the service information of the second terminal and adapts well to personalized service scenarios.

In some embodiments, the first network element or the server terminal transmitting the first information to the first terminal may include the following step: the first terminal transmitting second information to the first network element or the server terminal, and the first network element or the server terminal transmitting the first information to the first terminal according to the second information. The second information may be configured for requesting an implementation of a service, so as to effectively adapt to service application scenarios where the service is triggered to be executed by the first terminal.

In some embodiments, the service is the ranging or SL positioning service. Thus, an effective transmission of the service information of the terminal not connected to the network element may be achieved during an expectation of the ranging or SL positioning service.

In some embodiments, the second information includes at least one of: service information of the at least one second terminal; third indication information, which indicates that the service information of the at least one second terminal has been exchanged; or fourth indication information, which indicates a preferred exchange mode for the service information of the second terminal. This enables the first network element or the server terminal to make an accurate decision on which second terminals' service information needs to be exchanged.

In some embodiments, the first terminal may indicate the service information of one or more second terminals to the first network element or the server terminal.

In some embodiments, the first terminal may indicate to the first network element or the server terminal that the service information of one or more second terminals has been exchanged, which facilitates the first network element or the server terminal to determine which second terminals' service information needs to be exchanged for executing the service.

In some embodiments, the first terminal may indicate to the first network element or the server terminal a preferred exchange mode for the service information of the second terminal, so that the first network element or the server terminal may exchange the service information of the at least one second terminal based on the preferred exchange mode indicated by the first terminal.

In some embodiments, the first terminal may further indicate at least two items among the service information of the at least one second terminal, third indication information and fourth indication information to the first network element or the server terminal, thereby enabling the first network element or the server terminal to exchange comprehensive service information.

In some embodiments, the first information includes at least one of: a first message, where the first message is configured for exchanging the service information of the first terminal; information of the at least one second terminal, where second terminal information is configured to describe the second terminal and instruct the first terminal to exchange the service information with the corresponding second terminal; a second terminal information list, where the second terminal information list includes information of the at least one second terminal; first indication information, where the first indication information is configured to instruct the first terminal to exchange the service information with the at least one second terminal; or at least one second message, where a second message is associated with a second terminal, and the second message is configured for exchanging the service information of the second terminal via the first terminal. As a result, the first terminal may be effectively instructed to exchange the service information of the at least one second terminal.

The first message or the second message may specifically be an SLPP message. The SLPP message may also refer to an SLPP container, which may be encapsulated in a payload container format, an embedded message parameter format, or an embedded payload container format, which is not limited herein.

In some embodiments, the first information may include at least one of: fifth indication information, where the fifth indication information indicates that the second terminal is selected by the first terminal or by the first network element; sixth indication information, where the sixth indication information indicates exchanging service information of the second terminal selected by the first terminal; or seventh indication information, where the seventh indication information indicates exchanging service information of the second terminal discovered by the first terminal. This may be effectively applied to application scenarios where the second terminal has not been discovered and the first network element or the server terminal has not determined service information of which second terminals need to be exchanged.

In step S3102, the first terminal generates a third message associated with the second terminal according to the first information.

The third message is configured for the first terminal to exchange the service information of the associated second terminal, and the third message is constructed by the first terminal.

In some embodiments, after receiving the first information, the first terminal may exchange the service information of the at least one second terminal. If the first information contains at least one second message constructed by the first network element or the server terminal, the at least one second message terminates at the first terminal. It may be understood that the first terminal does not exchange the service information of the second terminal based on the second message constructed by the first network element or the server terminal. Instead, the first terminal refers to the first information to generate (reconstruct) a message associated with the second terminal for exchanging the service information of the second terminal. The message generated by the first terminal for exchanging the service information of the second terminal may be referred to as the third message.

In some embodiments, if a plurality of second terminals' service information needs to be exchanged, the third message associated with each second terminal among the plurality of second terminals may be generated.

In some embodiments, if there are a plurality of second terminals and the first terminal has exchanged the service information of part of the plurality of second terminals, the first terminal may generate the third message associated with each of the remaining second terminals, which is not limited herein.

In some embodiments, the first terminal generates the third message associated with the second terminal according to the first information, and the third message is configured for the first terminal to provide the service information of the associated second terminal to the second terminal.

The third message may specifically be an SLPP message. The SLPP message may also refer to an SLPP container, which may be encapsulated in a payload container format, an embedded message parameter format, or an embedded payload container format, which is not limited herein.

In step S3103, the first terminal transmits fifth information to the second terminal, where the fifth information includes the third message.

In some embodiments, the first terminal may transmit the fifth information containing the third message to the second terminal, so as to exchange the service information of the second terminal based on the third message. If there are a plurality of second terminals, the first terminal may transmit the fifth information containing the third message to each second terminal, so as to exchange the terminal capability, and/or the service measurement result, and/or the service-associated measurement result of the corresponding second terminal or provide the assistance data for the second terminal.

In step S3104, the second terminal transmits service information of the second terminal to the first terminal.

In some embodiments, after receiving the fifth information transmitted by the first terminal, the second terminal obtains the third message from the fifth information and feeds back the terminal capability, and/or the service measurement result, and/or the service-associated measurement result of the second terminal to the first terminal.

In step S3105, the first terminal receives the service information of the second terminal.

In some embodiments, the first terminal may receive the service information fed back by at least one second terminal and trigger subsequent steps.

In some embodiments, the service information of the at least one second terminal includes any one of: service information of at least one second terminal selected by the first terminal; service information of at least one second terminal discovered by the first terminal. Therefore, the service information of at least one second terminal selected by the first terminal or the service information of at least one second terminal discovered by the first terminal may be effectively transmitted to the first network element or the server terminal, facilitating effective execution of the service.

In step S3106, the first terminal transmits the service information of the first terminal and the service information of the at least one second terminal to the first network element or the server terminal.

In some embodiments, after exchanging the service information of the at least one second terminal, the first terminal may transmit the service information of the first terminal and the service information of the at least one second terminal to the first network element or the server terminal.

In some embodiments, the first network element or the server terminal may receive the service information of the first terminal and the service information of the at least one second terminal transmitted by the first terminal.

In some embodiments, the first terminal may further transmit information of at least one selected second terminal or information of at least one discovered second terminal to the first network element or the server terminal. Second terminal information is configured to describe the second terminal and may be, for example, a second terminal identifier (ID), so that the first network element or the server terminal may accurately learn the at least one second terminal selected by the first terminal or the at least one second terminal discovered by the first terminal.

In some embodiments, the first terminal may transmit the second terminal information list to the first network element or the server terminal, where the second terminal information list includes information of at least one selected second terminal or information of at least one discovered second terminal. The second terminal information is configured to describe the second terminal and may be, for example, a second terminal ID, so that the first network element or the server terminal may accurately learn the at least one second terminal selected by the first terminal or the at least one second terminal discovered by the first terminal.

In some embodiments, when the first information may contain at least one of the aforementioned fifth indication information, the sixth indication information or the seventh indication information, where the fifth indication information indicates that the second terminal is selected by the first terminal or by the first network element; the sixth indication information indicates exchanging the service information of the second terminal selected by the first terminal; and the seventh indication information indicates exchanging the service information of the second terminal discovered by the first terminal. Several possible implementation manners are available as follows.

In some embodiments, if the fifth indication information indicates that the second terminal is to be selected by the first terminal, the first terminal may determine, according to whether the first information contains the sixth indication information, whether to package and transmit service information of a second terminal list or a second terminal selected by the first terminal to the LMF network element in a response generated after processing received second information. For example, if the first information contains the sixth indication information, the service information of the second terminal list or the second terminal selected by the first terminal may be packaged and sent to the LMF network element. If the first information does not contain the sixth indication information, the service information of the second terminal list or the second terminal selected by the first terminal may not be packaged and sent to the LMF network element.

In some embodiments, if the fifth indication information indicates that the second terminal is to be selected by the first network element or the server terminal, the first terminal may determine, according to whether the first information contains the seventh indication information, whether to package and transmit service information of a second terminal list or a second terminal discovered by the first terminal to the LMF network element in a response generated after processing received second information. For example, if the first information contains the seventh indication information, the service information of the second terminal list or the second terminal discovered by the first terminal may be packaged and sent to the LMF network element; if the first information does not contain the seventh indication information, the service information of the second terminal list or the second terminal discovered by the first terminal may not be packaged and sent to the LMF network element.

In some embodiments, if the first information contains the fifth indication information but does not contain the sixth indication information or the seventh indication information, whether to carry the service information of discovered/selected second terminals or the second terminal list in the response sent to the LMF network element may be determined according to a specific implementation.

In some embodiments, the first network element or the server terminal may directly receive the service information reported by the second terminal via the first terminal, such as the terminal capability, and/or the service measurement result, and/or the service-associated measurement result of the second terminal.

The information exchange method involved in the embodiments of the disclosure may include at least one of step S3101 to step S3106. For instance, step S3101 may be implemented as an independent embodiment, step S3102 may be implemented as an independent embodiment, and so on, without limitation thereto. Step S3101 + S3102 may be implemented as an independent embodiment, step S3101 + S3102 + S3103 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

In embodiments of the disclosure, the first network element or the server terminal transmits the first information to the first terminal. The first terminal generates the third message associated with the second terminal according to the first information, where the third message is configured for the first terminal to exchange the service information of the associated second terminal or provide the service information of the associated second terminal. The first terminal transmits the fifth information including the third message to the second terminal. The second terminal transmits the service information of the second terminal to the first terminal. The first terminal receives the service information from the second terminal and transmits the service information of the first terminal and the service information of at least one second terminal to the first network element or the server terminal. The first network element or the server terminal receives the service information of the first terminal and the service information of the at least one second terminal transmitted by the first terminal. As a result, the first network element or the server terminal may instruct the first terminal connected to the first network element to initiate a request to acquire the service information of the terminal not connected to any network element.

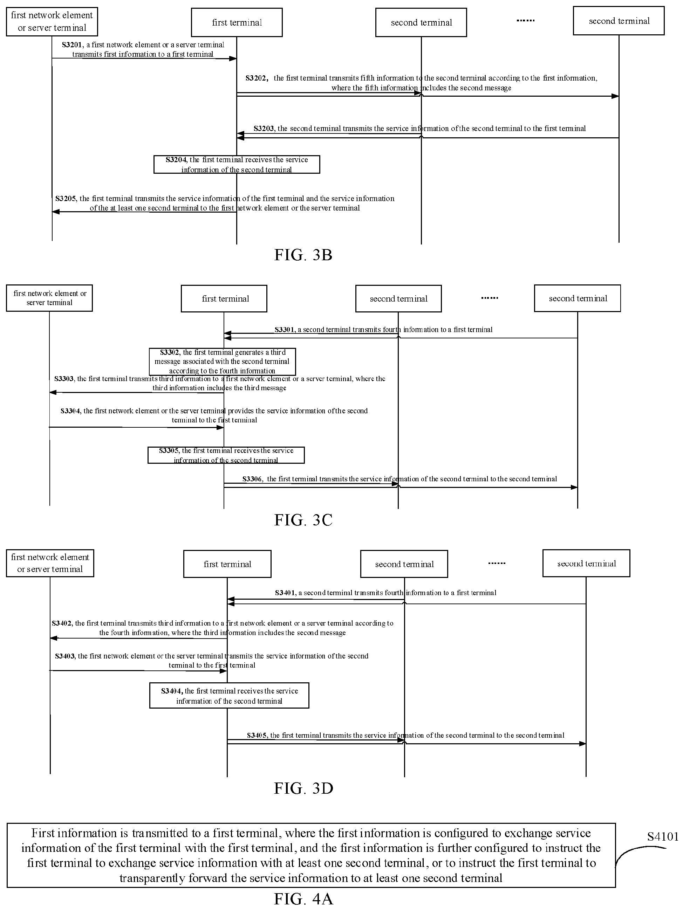

FIG. 3B is an interaction schematic diagram of an information exchange method according to an embodiment of the disclosure. As shown in FIG. 3B, the information exchange method according to embodiments of the disclosure is applicable to the communication system 100, and the method includes the following steps.

In step S3201, a first network element or a server terminal transmits first information to a first terminal.

In embodiments of the disclosure, an implementation manner is illustrated, where service information of the first terminal is exchanged or provided based on the first information, and the first terminal is instructed to transparently forward service information of corresponding second terminal(s) to at least one second terminal.

In embodiments of the disclosure, the service information of the second terminal may be acquired based on a second exchange mode. The second exchange mode refers, for example, to a mode in which the first network element or the server terminal initiates a request upon determining a demand for exchanging or providing service information, so as to instruct the first terminal to transparently forward the service information of the at least one second terminal. In the second exchange mode, the first terminal may transparently forward messages and information between the first network element and each second terminal, or between the server terminal and each second terminal.

In embodiments of the disclosure, the first network element or the server terminal may instruct the first terminal to transparently forward a terminal capability, and/or a service measurement result, and/or a service-associated measurement result of the corresponding second terminal to the at least one second terminal. The first network element or the server terminal may further provide service assistance data to the second terminal via the first terminal.

In some embodiments, the first information includes at least one of: a first message, where the first message is configured for exchanging the service information of the first terminal; at least one second message, where a second message is associated with a second terminal and configured for the first terminal to transparently forward the service information of the second terminal; or second indication information, where the second indication information is configured to instruct the first terminal to transparently forward the second message. Accordingly, the first terminal may be effectively instructed to transparently forward the service information of the at least one second terminal.

The second message contained in the foregoing first information is used by the first network element or the server terminal to initiate a request for acquiring the service information of the associated second terminal. That is to say, the second message is constructed by the first network element or the server terminal for exchanging the service information of the associated second terminal.

For a detailed description of step S3201, reference may be made to the foregoing embodiments, which will not be repeated herein.

In step S3202, the first terminal transmits fifth information to the second terminal according to the first information, where the fifth information includes the second message.

In some embodiments, under the implementation manner where the first network element or the server terminal instructs the first terminal to transparently forward the service information of the second terminal to the at least one second terminal, the first terminal may directly transparently forward the second message contained in the first information to the second terminal to collect or provide the service information of the corresponding second terminal. If there are a plurality of second terminals, the first terminal may transmit the fifth information containing the corresponding second message to each second terminal to collect the service information of each second terminal or to provide the service information of the corresponding second terminal.

In step S3203, the second terminal transmits the service information of the second terminal to the first terminal.

In some embodiments, after receiving the fifth information transmitted by the first terminal, the second terminal extracts the second message from the fifth information and transmits the service information of the second terminal to the first terminal.

In step S3204, the first terminal receives the service information of the second terminal.

In some embodiments, the first terminal may collect the service information of the at least one second terminal and trigger subsequent steps.

In step S3205, the first terminal transmits the service information of the first terminal and the service information of the at least one second terminal to the first network element or the server terminal.

In some embodiments, after collecting the service information of the at least one second terminal, the first terminal may transmit the service information of the first terminal and transparently forward the collected service information of the at least one second terminal to the first network element or the server terminal.

In some embodiments, the first network element or the server terminal may receive the service information of the first terminal and the service information of the at least one second terminal.

The information exchange method according to the embodiments of the disclosure may include at least one of step S3201 to step S3205. For example, step S3201 may be implemented as an independent embodiment, step S3202 may be implemented as an independent embodiment, and so on, without limitation thereto. Step S3201 + S3202 may be implemented as an independent embodiment, step S3201 + S3202 + S3203 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

In embodiments of the disclosure, the first network element or the server terminal transmits first information to the first terminal. The first terminal transmits fifth information containing the second message to the second terminal according to the first information. The second terminal transmits its service information to the first terminal. The first terminal receives the service information from the second terminal and transmits service information of the first terminal and service information of at least one second terminal to the first network element or the server terminal. The first network element or the server terminal receives the service information of the first terminal and the service information of at least one second terminal transmitted by the first terminal. As a result, the first network element or the server terminal can instruct the first terminal to collect and transparently transmit service information of terminals that are not connected to any network element, thereby realizing effective transmission of service information of such terminals.

FIG. 3C is an interaction schematic diagram of an information exchange method according to an embodiment of the disclosure. As shown in FIG. 3C, the information exchange method according to embodiments of the disclosure is applicable to the communication system 100, and the method includes the following steps.

In step S3301, a second terminal transmits fourth information to a first terminal.

The fourth information is configured to instruct the first terminal to exchange service information of the second terminal with a first network element or a server terminal.

In embodiments of the disclosure, an implementation manner is illustrated, where a request is initiated by the second terminal and the service information of the second terminal is exchanged via a first exchange mode. For example, upon determining a demand for exchanging or providing service information of the second terminal, the first terminal initiates a request to acquire service assistance data of the second terminal from the first network element or the server terminal, or to provide a terminal capability, and/or a service measurement result, and/or a service-associated measurement result of the second terminal to the first network element or the server terminal.

That is to say, in the first exchange mode, the first terminal acts as an initiator for acquiring the service information of the second terminal. If the second terminal needs to exchange the service assistance data of the second terminal, the first terminal serves as the initiator to exchange the service assistance data of the second terminal with the first network element and feed the acquired service assistance data back to the second terminal that initiated the request. If the second terminal needs to provide the terminal capability, and/or the service measurement result, and/or the service-associated measurement result of the second terminal, the first terminal serves as the initiator to provide the terminal capability, and/or the service measurement result, and/or the service-associated measurement result of the second terminal to the first network element.

In embodiments of the disclosure, the fourth information may include at least one of: second terminal information, which is configured to describe the second terminal and instruct the first terminal to exchange the service information of the corresponding second terminal; first indication information, which is configured to instruct the first terminal to exchange the service information of the second terminal; or a second message, where the second message is associated with the second terminal, and the second message is configured for exchanging the service information of the second terminal via the first terminal. Accordingly, the first terminal may be effectively instructed to exchange or provide the service information of at least one second terminal.

In step S3302, the first terminal generates a third message associated with the second terminal according to the fourth information.

The foregoing second message and third message indicate the service information for different functions. The second message is constructed by the second terminal for exchanging the service information of the second terminal and may terminate at the first terminal. When exchanging the service information of the second terminal with the first network element, the first terminal may refer to the second message to construct the third message. The third message is configured for exchanging the service messages of the second terminal between the first terminal and the first network element or the server terminal.

In step S3303, the first terminal transmits third information to a first network element or a server terminal, where the third information includes the third message.

In step S3304, the first network element or the server terminal provides the service information of the second terminal to the first terminal.

In step S3305, the first terminal receives the service information of the second terminal.

In step S3306, the first terminal transmits the service information of the second terminal to the second terminal.

For detailed descriptions of step S3301 to step S3306, reference may be made to the foregoing embodiments, which will not be repeated herein. The difference from the embodiments shown in FIG. 3A lies in that the third message constructed by the first terminal is configured to exchange service assistance data of the second terminal from the first network element or the server terminal, or to provide the terminal capability, and/or the service measurement result, and/or the service-associated measurement result of the second terminal to the first network element or the server terminal. After receiving the service assistance data fed back by the first network element or the server terminal, the first terminal may feed such service assistance data back to the second terminal.

The information exchange method according to the embodiments of the disclosure may include at least one of step S3301 to step S3306. For example, step S3301 may be implemented as an independent embodiment, step S3302 may be implemented as an independent embodiment, and so on, without limitation thereto. Step S3301 + S3302 may be implemented as an independent embodiment, step S3301 + S3302 + S3303 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

In embodiments of the disclosure, the second terminal transmits the fourth information to the first terminal, where the fourth information is configured to instruct the first terminal to exchange the service information of the second terminal with the first network element or the server terminal. The first terminal generates the third message associated with the second terminal according to the fourth information, and transmits the third information containing the third message to the first network element or the server terminal. The first network element or the server terminal provides the service information of the second terminal to the first terminal. The first terminal receives the service information of the second terminal and transmits the service information of the second terminal to the second terminal. As a result, the second terminal may instruct the first terminal connected to the first network element to initiate a request for acquiring the service information of the terminal not connected to any network element.

FIG. 3D is an interaction schematic diagram of an information exchange method according to an embodiment of the disclosure. As shown in FIG. 3D, the information exchange method according to embodiments of the disclosure is applicable to the communication system 100, and the method includes the following steps.

In step S3401, a second terminal transmits fourth information to a first terminal.

The fourth information is configured to instruct the first terminal to transparently forward service information of the second terminal to a first network element or a server terminal.

In embodiments of the disclosure, an implementation manner is illustrated, where a request is initiated by the second terminal and the service information of the second terminal is exchanged via a second exchange mode. In the second exchange mode, the first terminal may transparently forward messages and information between the first network element and each second terminal, or between the server terminal and each second terminal. For example, upon determining a service information exchange demand of the second terminal, the first terminal transparently forwards service assistance data of the second terminal acquired from the first network element or the server terminal.

In embodiments of the disclosure, the fourth information may include at least one of: second terminal information, where the second terminal information is configured to describe the second terminal and instruct the first terminal to transparently forward the service information of the corresponding second terminal; a second message, where the second message is associated with the second terminal, and the second message is configured for transparently forwarding the service information of the second terminal via the first terminal; or second indication information, where the second indication information is configured to instruct the first terminal to transparently forward the second message. Accordingly, the first terminal may be effectively instructed to transparently forwarding the service information of at least one second terminal.

In step S3402, the first terminal transmits third information to a first network element or a server terminal according to the fourth information, where the third information includes the second message.

In step S3403, the first network element or the server terminal transmits the service information of the second terminal to the first terminal.

In step S3404, the first terminal receives the service information of the second terminal.

In step S3405, the first terminal transmits the service information of the second terminal to the second terminal.

In some embodiments, the first network element or the server terminal may also actively provide the service information to the second terminal via the first terminal, such as providing the service assistance data of the second terminal. In this case, the second terminal may directly receive the service assistance data provided by the first network element or the server terminal via the first terminal.

The information exchange method according to the embodiments of the disclosure may include at least one of step S3401 to step S3405. For example, step S3401 may be implemented as an independent embodiment, step S3402 may be implemented as an independent embodiment, and so on, without limitation thereto. Step S3401 + S3402 may be implemented as an independent embodiment, step S3401 + S3402 + S3403 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

In embodiments of the disclosure, the second terminal transmits fourth information to the first terminal. The first terminal transmits third information containing the second message to the first network element or the server terminal according to the fourth information. The first network element or the server terminal transmits service information of the second terminal to the first terminal. The first terminal receives the service information of the second terminal and transmits such service information to the second terminal. As a result, the second terminal can instruct the first terminal connected to the first network element to transparently transmit service information of terminals not connected to any network element.

The foregoing first message, second message and third message may indicate service information for different functions. The first message is configured to exchange service information of the first terminal, and the second message is configured to exchange service information of the second terminal. The second message may be constructed by the first network element or the server terminal, or constructed by the second terminal. The second message may terminate at the first terminal. When exchanging the service information of the second terminal with the second terminal, the first terminal may construct the third message with reference to the second message. The third message is configured for exchanging the service information of the second terminal between the first terminal and the second terminal, or for exchanging the service information of the second terminal between the first terminal and the first network element or the server terminal.

In some embodiments, the first message may be originated by the first network element or the server terminal and received by the first terminal, or originated by the first terminal and received by the first network element or the server terminal.

In some embodiments, the second message may be originated by the second terminal and received by the first terminal. The first terminal may transparently forward the received second message to the first network element or the server terminal, so that the first network element or the server terminal may receive the second message transparently forwarded by the first terminal. Alternatively, the second message may be originated by the first network element or the server terminal and received by the first terminal. The first terminal may further transparently forward the received second message to the second terminal, so that the second terminal may receive the second message transparently forwarded by the first terminal.

In some embodiments, the third message is a message reconstructed by the first terminal with reference to the second message for exchanging the service information of the second terminal. For example, the first terminal may construct the third message with reference to the second message sent by the second terminal, and transmit the constructed third message to the first network element or the server terminal. Alternatively, the first terminal may construct the third message with reference to the second message sent by the first network element or the server terminal, and transmit the constructed third message to the second terminal.

In all the foregoing possible embodiments, in different procedures, the first message may contain the same or different information, the second message may contain the same or different information, and the third message may contain the same or different information. The first message may contain the same or different information when originated by different execution entities, the second message may contain the same or different information when originated by different execution entities, and the third message may contain the same or different information when originated by different execution entities. The first message may contain the same or different information when received by different execution entities, the second message may contain the same or different information when received by different execution entities, and the third message may contain the same or different information when received by different execution entities. The third message constructed by the first terminal based on the second message from the second terminal and the third message constructed by the first terminal based on the second message from the first network element or the server terminal may also contain identical or different information, which is not limited herein.

The foregoing different procedures may be different service procedures, or different steps or sub-procedures within a service procedure, without limitation herein.

FIG. 4A is an interaction schematic diagram of an information exchange method according to an embodiment of the disclosure. As shown in FIG. 4A, the information exchange method according to embodiments of the disclosure is applicable to a first network element or a server terminal, and the method includes the following steps.

In step S4101, first information is transmitted to a first terminal, where the first information is configured to exchange service information of the first terminal with the first terminal, and the first information is further configured to instruct the first terminal to exchange service information with at least one second terminal, or to instruct the first terminal to transparently forward the service information to at least one second terminal.

The information exchange method involved in the embodiments of the disclosure may include step S4101. For example, step S4101 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

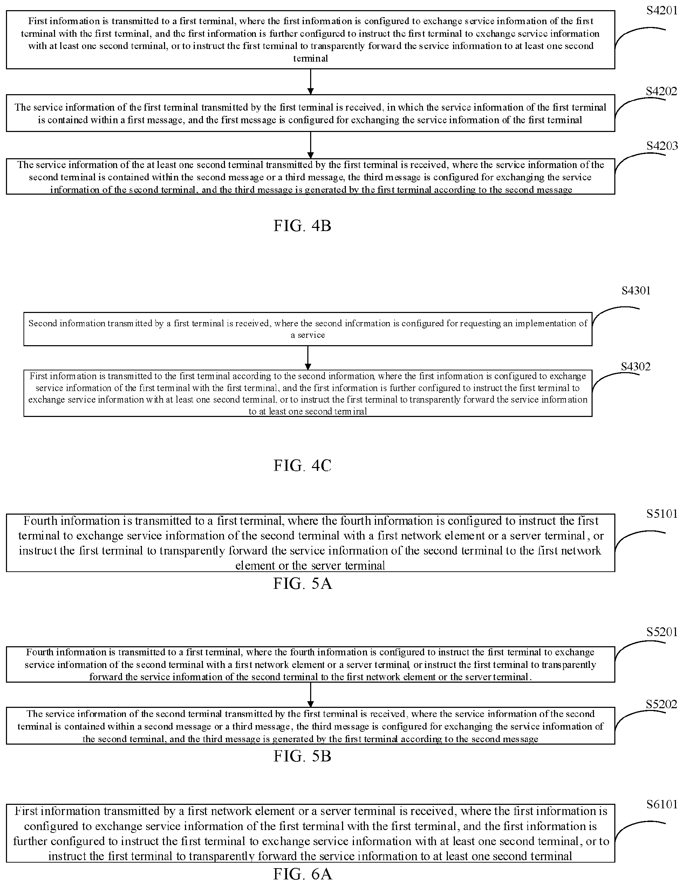

FIG. 4B is an interaction schematic diagram of an information exchange method according to an embodiment of the disclosure. As shown in FIG. 4B, the information exchange method according to embodiments of the disclosure is applicable to a first network element or a server terminal, and the method includes the following steps.

In step S4201, first information is transmitted to a first terminal, where the first information is configured to exchange service information of the first terminal with the first terminal, and the first information is further configured to instruct the first terminal to exchange service information with at least one second terminal, or to instruct the first terminal to transparently forward the service information to at least one second terminal.

In step S4202, the service information of the first terminal transmitted by the first terminal is received, in which the service information of the first terminal is contained within a first message, and the first message is configured for exchanging the service information of the first terminal.

In step S4203, the service information of the at least one second terminal transmitted by the first terminal is received, where the service information of the second terminal is contained within the second message or a third message, the third message is configured for exchanging the service information of the second terminal, and the third message is generated by the first terminal according to the second message.

The information exchange method involved in the embodiments of the disclosure may include at least one of step S4201 to step S4203. For example, step S4201 may be implemented as an independent embodiment, step S4202 may be implemented as an independent embodiment, and so on, without limitation thereto. Step S4201 + S4202 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

FIG. 4C is an interaction schematic diagram of an information exchange method according to an embodiment of the disclosure. As shown in FIG. 4C, the information exchange method according to embodiments of the disclosure is applicable to a first network element or a server terminal, and the method includes the following steps.

In step S4301, second information transmitted by a first terminal is received, where the second information is configured for requesting an implementation of a service.

In step S4302, first information is transmitted to the first terminal according to the second information, where the first information is configured to exchange service information of the first terminal with the first terminal, and the first information is further configured to instruct the first terminal to exchange service information with at least one second terminal, or to instruct the first terminal to transparently forward the service information to at least one second terminal.

The information exchange method involved in the embodiments of the disclosure may include at least one of step S4301 to step S4302. For example, step S4301 may be implemented as an independent embodiment, step S4302 may be implemented as an independent embodiment, and so on, without limitation thereto. Step S4301 + S4302 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

FIG. 5A is an interaction schematic diagram of an information exchange method according to an embodiment of the disclosure. As shown in FIG. 5A, the information exchange method according to embodiments of the disclosure is applicable to a second terminal, and the method includes the following steps.

In step S5101, fourth information is transmitted to a first terminal, where the fourth information is configured to instruct the first terminal to exchange service information of the second terminal with a first network element or a server terminal, or instruct the first terminal to transparently forward the service information of the second terminal to the first network element or the server terminal.

The information exchange method involved in the embodiments of the disclosure may include step S5101. For example, step S5101 may be implemented as an independent embodiment, without limitation thereto.

In the implementations or embodiments of the disclosure, on the premise of no conflict, each step may be implemented independently, combined arbitrarily or reordered; optional modes or optional examples may be combined arbitrarily, and may be arbitrarily combined with any steps of other implementation manners or other embodiments.

FIG. 5B is an interaction schematic diagram of an information exchange method according to an embodiment of the disclosure. As shown in FIG. 5B, the information exchange method provided in embodiments of the disclosure is applicable to a second terminal, and the method includes the following steps.

In step S5201, fourth information is transmitted to a first terminal, where the fourth information is configured to instruct the first terminal to exchange service information of the second terminal with a first network element or a server terminal, or instruct the first terminal to transparently forward the service information of the second terminal to the first network element or the server terminal.

In step S5202, the service information of the second terminal transmitted by the first terminal is received, where the service information of the second terminal is contained within a second message or a third message, the third message is configured for exchanging the service information of the second terminal, and the third message is generated by the first terminal according to the second message.

The information exchange method according to the embodiments of the disclosure may include at least one of step S5201 and step S5202. For example, step S5201 may be implemented as an independent embodiment, step S5202 may be implemented as an independent embodiment, and so on, without limitation thereto. Step S5201 + S5202 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

FIG. 6A is an interaction schematic diagram of an information exchange method according to an embodiment of the disclosure. As shown in FIG. 6A, the information exchange method provided in embodiments of the disclosure is applicable to a first terminal, and the method includes the following steps.

In step S6101, first information transmitted by a first network element or a server terminal is received, where the first information is configured to exchange service information of the first terminal with the first terminal, and the first information is further configured to instruct the first terminal to exchange service information with at least one second terminal, or to instruct the first terminal to transparently forward the service information to at least one second terminal.

The information exchange method according to the embodiments of the disclosure may include step S6101. For example, step S6101 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

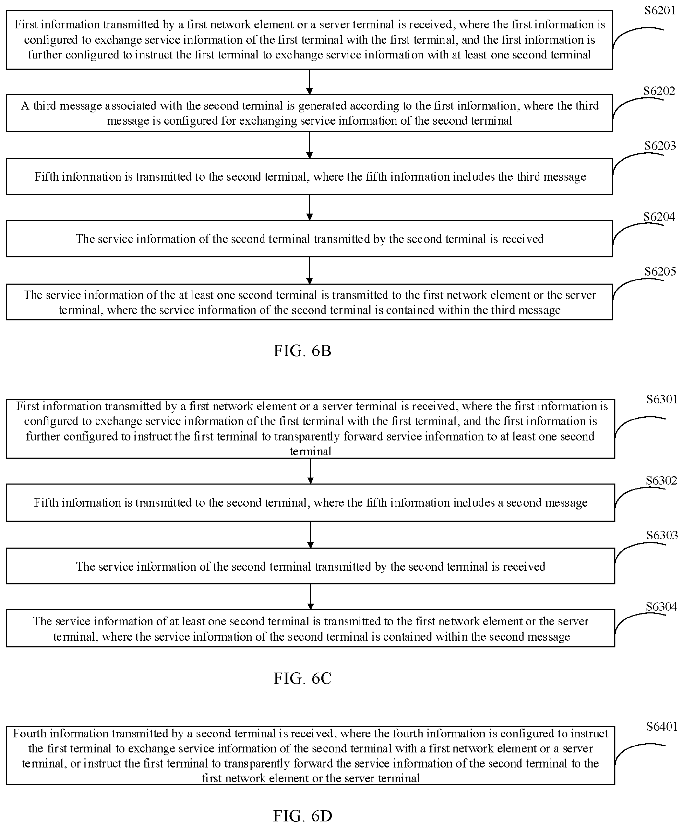

FIG. 6B is an interaction schematic diagram of an information exchange method according to an embodiment of the disclosure. As shown in FIG. 6B, the information exchange method provided in embodiments of the disclosure is applicable to a first terminal, and the method includes the following steps.

In step S6201, first information transmitted by a first network element or a server terminal is received, where the first information is configured to exchange service information of the first terminal with the first terminal, and the first information is further configured to instruct the first terminal to exchange service information with at least one second terminal.

In step S6202, a third message associated with the second terminal is generated according to the first information, where the third message is configured for exchanging service information of the second terminal.

In step S6203, fifth information is transmitted to the second terminal, where the fifth information includes the third message.

In step S6204, the service information of the second terminal transmitted by the second terminal is received.

In step S6205, the service information of the at least one second terminal is transmitted to the first network element or the server terminal, where the service information of the second terminal is contained within the third message.

The information exchange method according to the embodiments of the disclosure may include at least one of step S6201 to step S6205. For example, step S6201 may be implemented as an independent embodiment, step S6202 may be implemented as an independent embodiment, and so on, without limitation thereto. Step S6201 + S6202 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

FIG. 6C is an interaction schematic diagram of an information exchange method according to an embodiment of the disclosure. As shown in FIG. 6C, the information exchange method provided in embodiments of the disclosure is applicable to a first terminal, and the method includes the following steps.

In step S6301, first information transmitted by a first network element or a server terminal is received, where the first information is configured to exchange service information of the first terminal with the first terminal, and the first information is further configured to instruct the first terminal to transparently forward service information to at least one second terminal.

In step S6302, fifth information is transmitted to the second terminal, where the fifth information includes a second message.

In step S6303, the service information of the second terminal transmitted by the second terminal is received.

In step S6304, the service information of at least one second terminal is transmitted to the first network element or the server terminal, where the service information of the second terminal is contained within the second message.

The information exchange method according to the embodiments of the disclosure may include at least one of step S6301 to step S6304. For example, step S6301 may be implemented as an independent embodiment, step S6302 may be implemented as an independent embodiment, and so on, without limitation thereto. Step S6301 + S6302 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

FIG. 6D is an interaction schematic diagram of an information exchange method according to an embodiment of the disclosure. As shown in FIG. 6D, the information exchange method provided in embodiments of the disclosure is applicable to a first terminal, and the method includes the following steps.

In step S6401, fourth information transmitted by a second terminal is received, where the fourth information is configured to instruct the first terminal to exchange service information of the second terminal with a first network element or a server terminal, or instruct the first terminal to transparently forward the service information of the second terminal to the first network element or the server terminal.

The information exchange method according to the embodiments of the disclosure may include step S6401. For example, step S6401 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

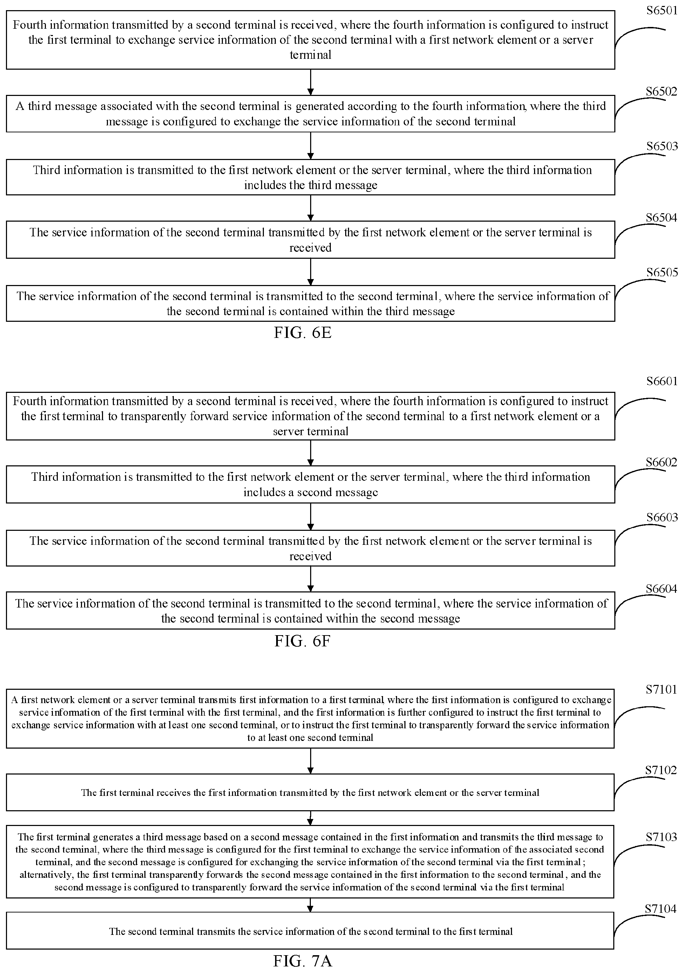

FIG. 6E is an interaction schematic diagram of an information exchange method according to an embodiment of the disclosure. As shown in FIG. 6E, the information exchange method provided in embodiments of the disclosure is applicable to a first terminal, and the method includes the following steps.

In step S6501, fourth information transmitted by a second terminal is received, where the fourth information is configured to instruct the first terminal to exchange service information of the second terminal with a first network element or a server terminal.

In step S6502, a third message associated with the second terminal is generated according to the fourth information, where the third message is configured to exchange the service information of the second terminal.

In step S6503, third information is transmitted to the first network element or the server terminal, where the third information includes the third message.

In step S6504, the service information of the second terminal transmitted by the first network element or the server terminal is received.

In step S6505, the service information of the second terminal is transmitted to the second terminal, where the service information of the second terminal is contained within the third message.

The information exchange method according to the embodiments of the disclosure may include at least one of step S6501 to step S6505. For example, step S6501 may be implemented as an independent embodiment, step S6502 may be implemented as an independent embodiment, and so on, without limitation thereto. Step S6501 + S6502 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

FIG. 6F is an interaction schematic diagram of an information exchange method according to an embodiment of the disclosure. As shown in FIG. 6F, the information exchange method provided in embodiments of the disclosure is applicable to a first terminal, and the method includes the following steps.

In step S6601, fourth information transmitted by a second terminal is received, where the fourth information is configured to instruct the first terminal to transparently forward service information of the second terminal to a first network element or a server terminal.

In step S6602, third information is transmitted to the first network element or the server terminal, where the third information includes a second message.

In step S6603, the service information of the second terminal transmitted by the first network element or the server terminal is received.

In step S6604, the service information of the second terminal is transmitted to the second terminal, where the service information of the second terminal is contained within the second message.

The information exchange method according to the embodiments of the disclosure may include at least one of step S6601 to step S6604. For example, step S6601 may be implemented as an independent embodiment, step S6602 may be implemented as an independent embodiment, and so on, without limitation thereto. Step S6601 + S6602 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

FIG. 7A is an interaction schematic diagram of an information exchange method according to an embodiment of the disclosure. As shown in FIG. 7A, the information exchange method provided in embodiments of the disclosure is applicable to a communication system, and the method includes the following steps.

In step S7101, a first network element or a server terminal transmits first information to a first terminal, where the first information is configured to exchange service information of the first terminal with the first terminal, and the first information is further configured to instruct the first terminal to exchange service information with at least one second terminal, or to instruct the first terminal to transparently forward the service information to at least one second terminal.

In step S7102, the first terminal receives the first information transmitted by the first network element or the server terminal.

In step S7103, the first terminal generates a third message based on a second message contained in the first information and transmits the third message to the second terminal, where the third message is configured for the first terminal to exchange the service information of the associated second terminal, and the second message is configured for exchanging the service information of the second terminal via the first terminal; alternatively, the first terminal transparently forwards the second message contained in the first information to the second terminal, and the second message is configured to transparently forward the service information of the second terminal via the first terminal.

In step S7104, the second terminal transmits the service information of the second terminal to the first terminal.

The information exchange method according to the embodiments of the disclosure may include at least one of step S7101 to step S7104. For example, step S7101 may be implemented as an independent embodiment, step S7102 may be implemented as an independent embodiment, and so on, without limitation thereto. Step S7101 + S7102 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

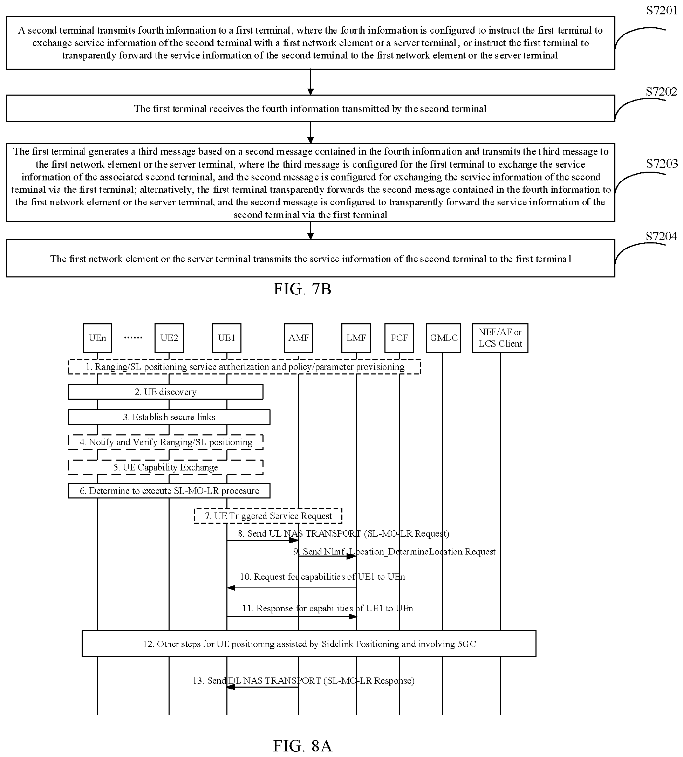

FIG. 7B is an interaction schematic diagram of an information exchange method according to an embodiment of the disclosure. As shown in FIG. 7B, the information exchange method provided in embodiments of the disclosure is applicable to a communication system, and the method includes the following steps.

In step S7201, a second terminal transmits fourth information to a first terminal, where the fourth information is configured to instruct the first terminal to exchange service information of the second terminal with a first network element or a server terminal, or instruct the first terminal to transparently forward the service information of the second terminal to the first network element or the server terminal.

In step S7202, the first terminal receives the fourth information transmitted by the second terminal.

In step S7203, the first terminal generates a third message based on a second message contained in the fourth information and transmits the third message to the first network element or the server terminal, where the third message is configured for the first terminal to exchange the service information of the associated second terminal, and the second message is configured for exchanging the service information of the second terminal via the first terminal; alternatively, the first terminal transparently forwards the second message contained in the fourth information to the first network element or the server terminal, and the second message is configured to transparently forward the service information of the second terminal via the first terminal.

In step S7204, the first network element or the server terminal transmits the service information of the second terminal to the first terminal.

The information exchange method according to the embodiments of the disclosure may include at least one of step S7201 to step S7204. For example, step S7201 may be implemented as an independent embodiment, step S7202 may be implemented as an independent embodiment, and so on, without limitation thereto. Step S7201 + S7202 may be implemented as an independent embodiment, without limitation thereto.

In the implementations or embodiments of the disclosure, provided that no conflict exists, each step may be implemented independently, arbitrarily combined or reordered; optional modes or optional examples may be arbitrarily combined, and may be arbitrarily combined with any steps of other implementation manners or other embodiments.

Embodiments of the disclosure provide an information exchange method for improving the exchange of SL positioning service information (an optional example of service information) between a first network element (e.g., an LMF network element) and associated terminal(s). The information exchange method may include: the LMF network element requesting a transmission of SL positioning service information such as a ranging/SL positioning capability or ranging/SL positioning measurement data/result, or the LMF network element providing assistance data of all terminals related to an SL positioning service; and a UE providing the ranging/SL positioning capability or the ranging/SL positioning measurement data/result, or the UE exchanging assistance data of all terminals related to the SL positioning service.

In the embodiments of the disclosure, the SL positioning service information is taken as an example of service information, and the LMF network element is taken as an example of the first network element, which is not limited herein. The embodiments of the disclosure provide an improved method for exchanging SL positioning service information between an LMF network element and associated terminal(s), including the following content.

In the embodiments of the disclosure, the method for exchanging the SL positioning service information between the LMF network element and associated terminal(s) includes that: the LMF network element and the terminal(s) may exchange the SL positioning service information of all terminals via an end-to-end SLPP container (transparent to a terminal connected to the LMF network element) of each associated terminal; alternatively, the LMF network element or a terminal may request to exchange the SL positioning service information of all terminals, and the terminal connected to the LMF network element (e.g., UE1) initiates an SLPP message exchange procedure with all other terminals or the LMF network element to exchange the SL positioning service information. The terminal connected to the LMF network element refers to a terminal that establishes a connection with the network and exchanges messages with the LMF via the AMF, such as UE1. Other UEs may be denoted as UEx, representing UEs other than UE1 involved in the service.

If the LMF network element and terminal(s) request to exchange the SL positioning service information of all terminals via the end-to-end SLPP container (transparent to UE1) of each terminal, the following contents are involved.

SL positioning service information for UEx sent by the LMF network element may be constructed at the LMF network element, and a request message is transparently forwarded by UE1 to the other UEx.

SL positioning service information of UEx sent by the UEx is constructed at the corresponding terminal and may be transparently forwarded to the LMF network element via UE1.

If the LMF network element exchanges the SL positioning service information of all UEx with the UEx, and UE1 initiates (without transparent forwarding) an SLPP message exchange procedure with the UEx or the LMF network element, the following contents are involved.

An SLPP container or an embedded SLPP message from the LMF network element or terminal(s) terminates at the terminal (UE1) connected to the LMF network element.

If the LMF network element sends the SL positioning service information intended for UEx, UE1 initiates an SLPP message exchange procedure with the UEx to acquire the SL positioning service information of each terminal or provide the SL positioning service information to each terminal. UE1 constructs and packages the SL positioning service information of relevant terminals and transmits the packaged information to the LMF network element as needed.

If a terminal sends the SL positioning service information intended for UEx, UE1 initiates an SLPP message exchange procedure with the LMF network element to acquire the SL positioning service information of each terminal or provide the SL positioning service information of each terminal. UE1 constructs and packages the SL positioning service information of relevant terminals and transmits the packaged information to the terminal as needed.

The SL positioning service information of all terminals exchanged between the LMF network element and terminals includes:
the SL positioning capability and the ranging/SL positioning measurement data/result requested by the LMF network element, or assistance data related to the SL positioning service of all terminals provided by the LMF network element; and
the SL positioning capability and the ranging/SL positioning measurement data/result provided by a terminal, or assistance data related to the SL positioning service exchanged by the terminal.

Exemplary descriptions of the foregoing method are provided as follows in optional embodiments.

As shown in FIG. 8A, FIG. 8A is a schematic diagram illustrating transmission of terminal capabilities in an SL-MO-LR procedure according to an embodiment of the disclosure. The entities shown in FIG. 8A may include UE1, UE2, ..., UEn (where n is a positive integer), an AMF network element, an LMF network element, a policy control function (PCF) network element, a GMLC network element, a network exposure function (NEF) network element/AF network element, or an LCS client. In this embodiment, information contained in an SLPP message received by UE1 from UE2 to UEn is contained into an SLPP container or an embedded SLPP message within a supplementary service message from UE1 to the LMF network element.
1. Ranging/SL positioning service authorization and policy and/or parameter provisioning

In some embodiments, procedures and signaling interaction for authorizing the ranging/SL positioning service for UE1 to UEn and delivering the policy and/or parameter may be completed in this step.

### 2. Terminal discovery

In some embodiments, based on a trigger of a service request (e.g., received from an application layer), terminal (for example, UE1 to UEn) discovery for the ranging/SL positioning is performed.

### 3. Establish secure links

In some embodiments, a secure groupcast or unicast link may be established between UE1 and UEn to enable information exchange among UE1 to UEn.

### 4. Notify and verify ranging/SL positioning

In some embodiments, UE1 and UE2 to UEn may communicate over a PC5 interface to authorize an execution of the ranging/SL positioning.

### 5. Terminal capability exchange

In some embodiments, the ranging/SL positioning capability exchange between UE1 and UE2 to UEn is performed using SLPP as specified in a communication protocol via the groupcast and/or unicast links established in Step 3.

### 6. Determine to execute SL-MO-LR procedure

In some embodiments, the target terminal (e.g., UE1) decides to execute the SL-MO-LR procedure based on the ranging/SL positioning capabilities of UE1 to UEn.

### 7. UE1 triggers a service request

In some embodiments, if UE1 is in a CM-IDLE state, UE1 may trigger another UE to initiate a service request to establish a signaling connection with the AMF network element serving UE1.

### 8. Send UL NAS TRANSPORT message (SL-MO-LR request message)

In some embodiments, the UL NAS TRANSPORT message stands for an uplink non-access stratum transport message.

In some embodiments, UE1 may transmit the UL NAS TRANSPORT message to the LMF network element via the AMF network element, where the UL NAS TRANSPORT message carries a supplementary service SL-MO-LR request message. The SL-MO-LR request message may indicate other UEs from UE2 to UEn (e.g., indicated based on an application layer ID), indicate any required assistance data, indicate whether location calculation assistance is needed, and indicate whether location results shall be transmitted to an LCS client or an AF network element. The SL-MO-LR request message may also include an ID of the LCS client or the AF network element, and may further include an address of the GMLC network element to allow the LCS client or the AF network element to connect to the GMLC network element via such address.

In some embodiments, a "service type" in the SL-MO-LR request message may include a certain type of MO-LR service requested by the terminal for the LCS client. The "service type" also covers a preferred type of the ranging/SL position result (e.g., absolute location, relative location, distance and direction between pairs of UEs, velocities and relative velocities) and required quality of service (QoS) with location calculation assistance from the LMF network element. Additionally, the SLPP container containing ranging capabilities of UE2 to UEn obtained in Step 5 may be included. Alternatively, the SL-MO-LR request message may not include the SLPP container containing ranging capabilities of UE2 to UEn, but carry indication information to indicate that the capabilities of all or partial UEs among UE2 to UEn are available, so as to assist the LMF network element in determining a manner to acquire the capabilities of UE2 to UEn. In some embodiments, the SL-MO-LR request message may further include a preferred request mode for supporting a capability transmission of UE2 to UEn, such as requesting by a UE (where UE1 does not perform transparent forwarding) or requesting by a LMF network element (where UE1 performs transparent forwarding).

### 9. Send Nlmf_Location_DetermineLocation request message

In some embodiments, the AMF network element may select the LMF network element serving UE1 (e.g., the LMF network element supporting the ranging/SL positioning), and initiate a Nlmf_Location_DetermineLocation service operation to the LMF network element based on information in the SL-MO-LR request message, where the service operation may include an LCS correlation ID.

### 10. Request for capabilities of UE1 to UEn

In some embodiments, the LMF network element may transmit a request to UE1 via a supplementary service message with embedded SLPP container(s) or SLPP message(s) specified in an SLPP communication protocol, so as to exchange the capabilities of UE1 to UEn.

In some embodiments, there are two modes for requesting the capabilities of UE1 to UEn.

Mode 1: UE1 exchanges the capabilities of UE2 to UEn. This mode is determined by the LMF network element based on information received in step 8 and/or LMF local configuration information. The supplementary service message may contain the following contents:
an embedded SLPP container or SLPP message for UE1 to request the capabilities of UE1;
a list of application layer IDs of UE2 to UEn, for indicating that the capabilities of UE2 to UEn need to be acquired;
indication information for indicating that capabilities of all specified UEs or capabilities of UE(s) need to be acquired.

In addition, if the LMF network element has already obtained capabilities of partial UEs, the list and/or indication information may also indicate specific UEs or a specific UE list among UE2 to UEn whose capabilities are needed to be acquired.

The supplementary service message may further contain embedded SLPP container(s) or SLPP message(s) for requesting capabilities of UE2 to UEm, where m is a positive integer. Values of n and m may be the same or different, and no restriction is imposed on a magnitude relationship between n and m.

Mode 2: The LMF network element exchanges the capabilities of UE2 to UEn, i.e., UE1 performs transparent forwarding. This mode is determined by the LMF network element based on information received in step 8 and/or the LMF local configuration information. The supplementary service message may contain the following contents:
an embedded SLPP container or SLPP message for UE1 to request capabilities of UE1;
an embedded SLPP container or SLPP message for each UE among UE2 to UEn to request capabilities of the corresponding UE.

In addition, if the LMF network element has already obtained capabilities of partial UEs, the supplementary service message may contain a specific UE list, together with an embedded SLPP container or SLPP message corresponding to each UE in the specific UE list to request capabilities of the corresponding UE.

### 11. Response for capabilities of UE1 to UEn

In some embodiments, UE1 may transmit its own capabilities to the LMF network element via a supplementary service message carrying embedded SLPP container(s) or SLPP message(s) specified in a communication protocol.

In some embodiments, if UE1 exchanges UE capabilities in the non-transparent forwarding mode according to the request message received in step 10, UE1 returns the required UE capabilities to the LMF network element according to the request message in step 10. If the UE capabilities have not been acquired, UE1 initiates an SLPP capability transmission procedure with the corresponding UE to obtain SL positioning capabilities of the corresponding UE. In this case, the SLPP container(s) or SLPP message(s) received by UE2 to UEn are constructed by UE1. If the request message contains embedded SLPP container(s) or SLPP message(s) for requesting capabilities of UE2 to UEm, such embedded SLPP container(s) or SLPP message(s) terminate at UE1. UE1 may generate new SLPP container(s) or SLPP message(s) for UE2 to UEn based on the embedded SLPP container(s) or SLPP message(s) received from the LMF network element. Separate embedded SLPP container(s) or SLPP message(s) may be used for each UE to deliver the corresponding UE's capabilities.

In some embodiments, if the LMF network element exchanges capabilities of UE2 to UEn in the transparent forwarding mode as required in step 10, UE1 transparently forwards the SLPP container(s) or SLPP message(s) constructed by the LMF network element to each UE among UE2 to UEn. Each UE receiving the SLPP container(s) or SLPP message(s) forwards its capabilities transparently to the LMF network element via UE1. In some embodiments, to instruct UE1 to transparently forward SLPP container(s) or SLPP message(s), an indication indicating to transparently forward the SLPP container(s) or SLPP message(s) to the LMF network element may be included. Such indication may further carry a location session ID, which may be routing information or an LCS correlation ID received by UE1 as additional information in the NAS message received in step 10. The capabilities of each UE are transmitted in separate embedded SLPP container(s) or SLPP message(s) dedicated to the corresponding UE.

In some embodiments, after checking the UE capabilities, the LMF network element may downselect at least one UE (i.e., downselect a UE list) for an SL positioning operation.

In some embodiments, different embedded SLPP containers may be distinguished by carrying corresponding application layer IDs in the supplementary service messages.

### 12. Other steps for terminal positioning procedure assisted by SL positioning and involving 5GC

### 13. Send DL NAS TRANSPORT message (SL-MO-LR response message)

In some embodiments, the DL NAS TRANSPORT message stands for a downlink non-access stratum transport message.

In some embodiments, the LMF network element sends a DL NAS TRANSPORT message to UE1 via the AMF network element. The DL NAS TRANSPORT message may carry an SL-MO-LR response message as well as a ranging/SL positioning result.

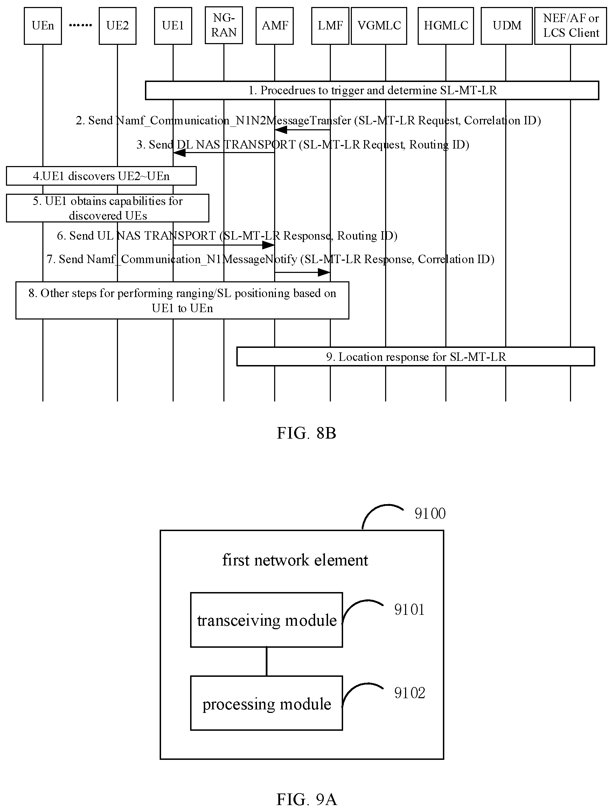

As shown in FIG. 8B, FIG. 8B is a schematic diagram illustrating transmission of terminal capabilities in an SL-MT-LR procedure according to an embodiment of the disclosure. Entities shown in FIG. 8B may include UE1, UE2, ..., UEn (n is a positive integer), an AMF network element, an LMF network element, a GMLC network element, a unified data management (UDM) network element, a next generation radio access network (NG-RAN), an NEF network element/AF network element, or an LCS client.

### 1. Procedures to trigger and determine to execute SL-MT-LR

### 2. Invocation of Namf_Communication_N1N2MessageTransfer service (SL-MT-LR request message, correlation ID)

In some embodiments, the LMF invokes the Namf_Communication_N1N2MessageTransfer service operation to send the SL-MT-LR request message as a supplementary service message to the AMF network element providing a service, with a session ID parameter set to the LCS correlation ID (i.e., correlation ID).

In some embodiments, the SL-MT-LR request message may include an application layer ID of each UE among UE2 to UEn, a type of required positioning results (e.g., relative location, distance and/or direction), and an SL reference terminal (used for relative location determination).

In some embodiments, if the LMF network element determines that a positioning terminals is to be selected by the target terminal or by the LMF network element, the SL-MT-LR request message may contain an indication specifying that the positioning terminal is to be selected by the target terminal or by the LMF network element.

In some embodiments, the LMF network element may send the SL-MT-LR request message to UE1 via a supplementary service message carrying the embedded SLPP container(s) or SLPP message(s) specified in the communication protocol, so as to acquire capabilities of UE1 to UEn. Since UE2 to UEn have not yet been discovered and it is undetermined which UEs' capabilities need to be requested. Therefore, capabilities of UE(s) may be requested in the following manner, and the SL-MT-LR request message may include:
an embedded SLPP container or SLPP message for UE1 to request capabilities of UE1;
an indication to acquire capabilities of all positioning terminals selected by the target terminal;
an indication to acquire capabilities of all discovered terminals.

In addition, if the LMF network element has already obtained capabilities of partial UEs, the SL-MT-LR request message may contain a specific UE list to indicate specific UEs whose capabilities need to be acquired, or UEs in the UE list whose capabilities need to be acquired, or UEs or a UE list whose capabilities have already been acquired.

### 3. Send DL NAS TRANSPORT message (SL-MT-LR request message, route ID)

In some embodiments, the AMF network element may transparently forward the SL-MT-LR request message and the route ID corresponding to the LCS correlation ID to UE1 via the DL NAS TRANSPORT message.

### 4. UE1 discovers UE2 to UEn

In some embodiments, if UE2 to UEn have not been discovered, UE1 attempts to discover UE2 to UEn using respective application layer IDs of UE2 to UEn.

### 5. UE1 obtains capabilities of discovered UEs

In some embodiments, if UE1 has not yet obtained SL positioning capabilities of discovered terminals, UE1 may acquire such SL positioning capabilities via SLPP.

### 6. Send UL NAS TRANSPORT message (SL-MT-LR response message, route ID)

In some embodiments, UE1 returns a supplementary service SL-MT-LR response message to an AMF network element providing a service in the UL NAS TRANSPORT message, and the UL NAS TRANSPORT message carries the route ID received in Step 3. The supplementary service message may include an SLPP container containing ranging capabilities of UEs.

In some embodiments, the SL-MT-LR response message may indicate certain UEs among UE2 to UEn that have been discovered, as well as SL positioning capabilities of the discovered UEs or SL positioning capabilities of selected UEs.

In some embodiments, if UE1 receives an indication in Step 2 that the positioning terminal is to be selected by the LMF network element, the SL-MT-LR response message may carry information of all discovered positioning terminals, and the LMF selects the positioning terminal based on the information of all discovered positioning terminals. If UE1 receives an indication in the SL-MT-LR request message that the positioning terminal is to be selected by the target terminal, UE1 selects the positioning terminal, and the SL-MT-LR response message may carry the application layer ID of the selected positioning terminal.

### 7. Send Namf_Communication_N1MessageNotify message (SL-MT-LR response message, correlation ID)

In some embodiments, the AMF network element may transparently forward the SL-MT-LR response message to the LMF network element indicated by the route ID received in Step 6, together with an LCS correlation ID corresponding to the route ID.

### 8. Other Steps for performing ranging/SL positioning based on UE1 to UEn

In some embodiments, UE1 and other discovered UEs may perform the ranging/SL positioning following Step 10 to Step 12 of the SL-MO-LR procedure described in the foregoing embodiments. The difference from the foregoing embodiments lies in that a location measurement data or result of the ranging/SL positioning is returned to the LMF network element, and the LMF network element instructs UE1 whether the ranging/SL positioning location result is calculated by the LMF network element or by UE1. For certain undiscovered UEs among UE2 to UEn, the LMF network element interacts with the GMLC network element to trigger the 5GC-MT-LR procedure for UE2 to UEn, obtain absolute locations of UE2 to UEn, and calculate relative locations, distances and/or directions relative to UE1.

### 9. Location response for SL-MT-LR procedure

In some embodiments, the LMF network element returns the SL positioning/ranging result to the LCS client or AF network element via the AMF network element and the GMLC network element.

It should be noted that in the foregoing embodiments, steps for transmitting terminal capabilities, service assistance data and location information may be executed in any order or simultaneously.

As shown in Table 1 below, Table 1 illustrates exemplary transmission of ranging/SL positioning information during an SL positioning procedure. In embodiments of the disclosure, in addition to exchanging ranging/SL positioning capabilities, SLPP also supports exchange of ranging/SL positioning assistance data and exchange of ranging/SL positioning measurement data/results during ranging/SL positioning procedures. The assistance data is provided by the LMF network element, or requested by a UE and then provided by the LMF network element. The measurement data/results are provided by a UE, or requested by the LMF network element and then provided by a UE. All types of information listed in Table 1 may also be exchanged between the LMF network element and the UE in the transparent forwarding or non-transparent forwarding mode via UE1 as illustrated in the foregoing embodiments.

**Table 1**

| | | UE1 transparent forwarding | UE1 non-transparent forwarding |
|---|---|---|---|
| Providing Assistance Data | LMF-> UEx | Upon an SLPP request from UEx or proactively, the LMF network element constructs an SLPP message to provide assistance data of the UEx to UEx, and transparently forwards such message to UEx via UE1. | Upon a request from UE1/UEx or proactively, assistance data of UEx is provided to UE1. UE1 constructs an SLPP message for UEx using the assistance data received from the LMF network element (e.g., containing in the SLPP message), and provides the assistance data of UEx to UEx during exchange between UE1 and UEx. |
| Requ esting Positi oning Infor mation | LMF-> UEx | UE1 may transparently forward a location measurement request for UEx received from the LMF to UEx. | The LMF may transmit a location measurement request for UEx to UE1. If UE1 holds an available location measurement information or result of UEx, UE1 replies to the LMF with location information associated with UEx. If UE1 does not hold an available location measurement information or result of UEx, UE1 may request location information of UEx via an additional SLPP exchange, and feeds the acquired location information of UEx back to the LMF network element. |
| Providing Positioning Information | UEx-> LMF | Upon a request from the LMF or proactively, UEx transparently forwards a UEx location measurement request to the LMF network element via UE1. UEx constructs a location measurement result of UEx as an SLPP message of UEx, and transparently forwards such message to the LMF via UE1. | UEx delivers a position measurement result of UEx to UE1 upon a request from the LMF or proactively. UE1 constructs a received location measurement result of UEx as an SLPP message associated with UEx (e.g., containing in the SLPP message), and provides the location measurement result of UEx to the LMF network element during exchange between UE1 and the LMF network element. |
| Requesting Assistance Data | UEx-> LMF | A request of UEx is transparently forwarded to the LMF via UE1, and the LMF network element transparently forwards assistance data to UEx via UE1. | UEx sends a request to UE1. If UE1 holds an available assistance data for UEx, UE1 responds to UEx with the assistance data provided for UEx. If UE1 does not hold an available assistance data for UEx, UE1 may request assistance data from the server terminal or the LMF network element via an additional SLPP exchange, and provide UEx with the assistance data of UEx acquired from the LMF or the server terminal. |

Embodiments of the disclosure support the LMF network element to request transmission of SL positioning service information of all terminals related to SL positioning services to the LMF network element, and meanwhile provide a method for the LMF network element to request and receive SL positioning service information of all associated terminals. The ranging/SL positioning service may be effectively executed based on the received SL positioning service information of all associated terminals.

Embodiments of the disclosure further provide apparatuses for implementing any of the foregoing methods. For example, an apparatus is provided, which includes units or modules configured to perform each step executed by a terminal in any of the foregoing methods. As another example, another apparatus is provided, which includes units or modules configured to perform each step executed by the first network element (such as an LMF network element) in any of the foregoing methods.

It should be understood that the division of each unit or module in the foregoing apparatus merely corresponds to logical function partitioning. During physical implementation, all or part of the units and modules may be integrated into a single physical entity, or deployed as physically separate entities. In addition, the units or modules of the apparatus may be implemented by a processor invoking software: for example, the apparatus includes a processor connected to a memory storing instructions. The processor invokes the instructions stored in the memory to implement any of the foregoing methods or realize the functions of each unit or module of the apparatus. The processor may be a general-purpose processor such as a central processing unit (CPU) or a microprocessor, and the memory may be an internal memory of the apparatus or an external memory thereof. Alternatively, the units or modules of the apparatus may be implemented by hardware circuits. Partial or full functions of the units and modules can be realized through hardware circuit design. Such hardware circuits may be regarded as one or more processors. In one implementation, the hardware circuit is an application-specific integrated circuit (ASIC), which realizes partial or all functions of the above units and modules via design of logical relationships among internal circuit elements. In another implementation, the hardware circuit is implemented by a programmable logic device (PLD), taking a field programmable gate array (FPGA) as an example. An FPGA contains a large number of logic gate circuits, and the connection relationships between logic gate circuits are configured via configuration files to realize partial or all functions of the foregoing units and modules. All units or modules of the foregoing apparatus may be implemented by a processor invoking software, implemented by hardware circuits, partially implemented by a processor invoking software, with the remaining parts implemented by hardware circuits.

In the embodiments of the disclosure, a processor refers to a circuit with signal processing capability. In one implementation, the processor may be a circuit capable of reading and executing instructions, such as a central processing unit (CPU), a microprocessor, a graphics processing unit (GPU) (also regarded as a microprocessor), or a digital signal processor (DSP). In another implementation, the processor may realize specific functions through fixed or reconfigurable logical relationships of hardware circuits. For example, the processor may be a hardware circuit implemented by an application-specific integrated circuit (ASIC) or a programmable logic device (PLD), such as an FPGA. In a reconfigurable hardware circuit, the process in which the processor loads a configuration file to configure the hardware circuit may be regarded as the process of the processor loading instructions to implement the functions of part or all of the foregoing units or modules. In addition, the hardware circuit may be an artificial intelligence-oriented hardware circuit, which may be deemed an ASIC, such as a neural network processing unit (NPU), a tensor processing unit (TPU), a deep learning processing unit (DPU), and the like.

FIG. 9A is a structural schematic diagram of a first network element provided in an embodiment of the disclosure. As shown in FIG. 9A, the first network element 9100 may include at least one of a transceiving module 9101, a processing module 9102, and the like. The first network element 9100 includes:
the transceiving module 9101, configured to transmit first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal.

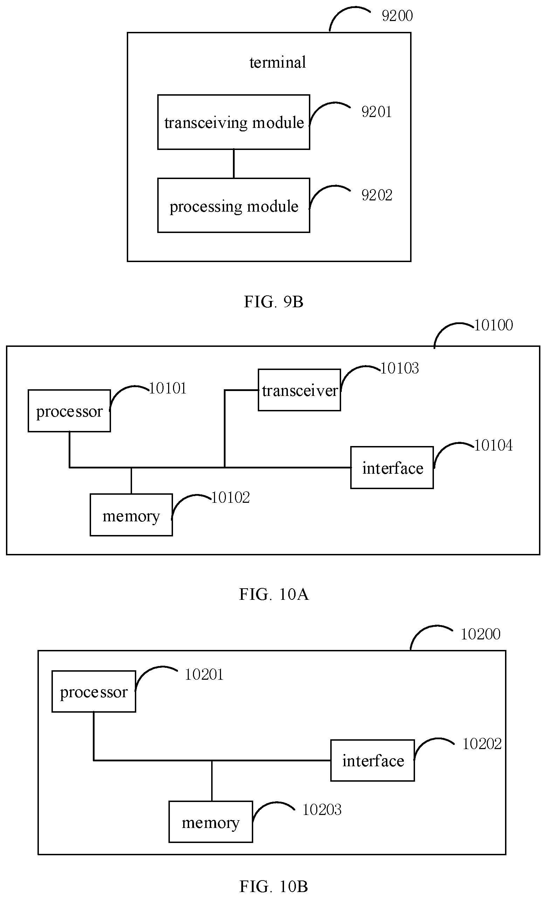

FIG. 9B is a structural schematic diagram of a terminal provided in an embodiment of the disclosure. As shown in FIG. 9B, the terminal 9200 may include at least one of a transceiving module 9201, a processing module 9202, and the like. The terminal 9200 includes:
the transceiving module 9201, configured to transmit first information to a first terminal, in which the first information is configured to exchange service information of the first terminal with the first terminal, and the first information is further configured to instruct the first terminal to exchange service information with at least one second terminal, or to instruct the first terminal to transparently forward the service information to at least one second terminal; or transmit fourth information to a first terminal, in which the fourth information is configured to instruct the first terminal to exchange service information of a second terminal with a first network element or a server terminal, or instruct the first terminal to transparently forward the service information of the second terminal to the first network element or the server terminal; or receive the first information transmitted by the first network element or the server terminal; or receive the fourth information transmitted by the second terminal.

In some embodiments, the transceiving module may include a transmitting module and/or a receiving module, which may be separated from each other or integrated together. In some embodiments, the transceiving module may be replaced with a transceiver.

In some embodiments, the processing module may be a single module or include a plurality of sub-modules. In some embodiments, the plurality of sub-modules respectively execute all or part of the steps required by the processing module. In some embodiments, the processing module may be replaced with a processor.

FIG. 10A is a structural schematic diagram of a communication device provided in an embodiment of the disclosure. The communication device 10100 may be a terminal, a network device, a chip, a chip system or a processor that enables a terminal to implement any of the foregoing methods, or a chip, a chip system or a processor that enables a network device to implement any of the foregoing methods. The communication device 10100 is configured to implement the methods described in the foregoing method embodiments, and reference may be made to the descriptions of the foregoing method embodiments for details.

As shown in FIG. 10A, the communication device 10100 includes one or more processors 10101. The processor 10101 may be a general-purpose processor or a dedicated processor, such as a baseband processor or a central processing unit. The baseband processor may process communication protocols and communication data, while the central processing unit may control the communication apparatus (e.g., base station, baseband chip, terminal equipment, terminal chip, DU or CU), execute programs, and process program data. The communication device 10100 is configured to execute any of the foregoing methods.

In some embodiments, the communication device 10100 further includes one or more memories 10102 for storing instructions. In some embodiments, all or part of the memories 10102 may be arranged outside the communication device 10100.

In some embodiments, the communication device 10100 further includes one or more transceivers 10103. When the communication device 10100 is equipped with one or more transceivers 10103, the transceivers 10103 perform at least one of communication steps such as transmission and reception in the foregoing methods, and the processor 10101 performs the remaining steps.

In some embodiments, a transceiver may include a receiver and/or a transmitter, and the receiver and the transmitter may be separate or integrated together. In some embodiments, terms such as transceiver, transceiver unit, transceiver machine, transceiver circuit, interface circuit, and interface may be replaced with each other; terms such as transmitter, transmitting unit, transmitting machine, and transmitting circuit may be replaced with each other; and terms such as receiver, receiving unit, receiving machine, and receiving circuit may be replaced with each other.

In some embodiments, the communication device 10100 may include one or more interface circuits 10104. In some embodiments, the interface circuit 10104 is connected to the memory 10102. The interface circuit 10104 may receive signals from the memory 10102 or other apparatuses and send signals to the memory 10102 or other apparatuses. For example, the interface circuit 10104 may read instructions stored in the memory 10102 and send the instructions to the processor 10101.

The communication device 10100 described in the foregoing embodiments may be a terminal, a network device or a third entity, but the scope of the communication device 10100 described in the disclosure is not limited thereto, and the structure of the communication device 10100 is not restricted to that shown in FIG. 10A. The communication device may be an independent device or a part of a larger device. For example, the communication device may be: (1) an independent integrated circuit (IC), a chip, a system-on-chip or a subsystem; (2) a set of one or more ICs. In some embodiments, the above IC set may further include a storage component for storing data and programs; (3) an application specific integrated circuit (ASIC), such as a modem; (4) a module embedded in other devices; (5) a receiver, a terminal device, an intelligent terminal device, a cellular phone, a wireless device, a handset, a mobile unit, an in-vehicle device, a network device, a cloud device, an artificial intelligence device, and the like; (6) other types of devices.

FIG. 10B is a structural schematic diagram of a chip provided in an embodiment of the disclosure. When the communication device 10100 is implemented as a chip or a chip system, reference may be made to the structural schematic diagram of the chip 10200 shown in FIG. 10B, which is not limited thereto.

The chip 10200 includes one or more processors 10201, and the chip 10200 is configured to execute any of the foregoing methods.

In some embodiments, the chip 10200 further includes one or more interface circuits 10202. In some embodiments, the interface circuit 10202 is connected to the memory 10203. The interface circuit 10202 may receive signals from the memory 10203 or other apparatuses and send signals to the memory 10203 or other apparatuses. For example, the interface circuit 10202 may read instructions stored in the memory 10203 and send the instructions to the processor 10201.

In some embodiments, the interface circuit 10202 performs at least one of communication steps such as transmission and reception in the foregoing methods, and the processor 10201 performs the remaining steps. In some embodiments, terms including interface circuit, interface, transceiving pin and transceiver may be mutually interchangeable. In some embodiments, the chip 10200 further includes one or more memories 10203 for storing instructions. In some embodiments, all or part of the memories 10203 may be arranged outside the chip 10200.

The disclosure further provides a storage medium. The storage medium stores instructions. When the instructions run on the communication device 10100, the communication device 10100 is enabled to execute any of the above methods. In some embodiments, the storage medium is an electronic storage medium. In some embodiments, the storage medium is a computer-readable storage medium, and may also be a storage medium readable by other devices. In some embodiments, the storage medium may be a non-transitory storage medium, and may also be a transitory storage medium.

The disclosure further provides a program product. When the program product is executed by the communication device 10100, the communication device 10100 is enabled to execute any of the above methods. In some embodiments, the program product is a computer program product.

The disclosure further provides a computer program. When the computer program runs on a computer, the computer is enabled to execute any of the above methods.

The foregoing embodiments may be implemented entirely or partially by software, hardware, firmware, or any combination thereof. Where implemented by software, all or part of the embodiments may be provided in the form of a computer program product. The computer program product contains one or more computer programs. When the computer programs are loaded and executed on a computer, all or part of the processes or functions according to the embodiments of the disclosure are generated. The computer may be a general-purpose computer, a dedicated computer, a computer network, or other programmable devices. The computer programs may be stored in a computer-readable storage medium, or transmitted from one computer-readable storage medium to another. For example, the computer programs may be transmitted from one website, computer, server or data center to another website, computer, server or data center via wired means (such as coaxial cable, optical fiber, digital subscriber line (DSL)) or wireless means (such as infrared, radio, microwave, etc.). The computer-readable storage medium may be any available medium accessible by a computer, or a data storage device such as a server or data center integrated with one or more available media. The available media may be magnetic media (e.g., floppy disk, hard disk, magnetic tape), optical media (e.g., digital video disc (DVD)), or semiconductor media (e.g., solid state disk (SSD)).

A person of ordinary skill in the art may appreciate that the exemplary units and algorithm steps described in conjunction with the embodiments disclosed herein may be implemented by electronic hardware, or a combination of computer software and electronic hardware. Whether such functions are executed by hardware or software depends on the specific application and design constraints of the technical solution. Skilled artisans may employ different approaches to implement the described functions for each specific application, but such implementations shall not be deemed to depart from the scope of the disclosure.

Those skilled in the art can clearly understand that for convenience and conciseness of description, for the specific working processes of the systems, apparatuses and units described above reference may be made to the corresponding processes in the foregoing method embodiments, which will not be repeated herein.

The foregoing descriptions merely illustrate specific embodiments of the disclosure, but the protection scope of the disclosure is not limited thereto. Any variations or substitutions readily conceived by those skilled in the art within the technical scope disclosed by the disclosure shall fall within the protection scope of the disclosure. Therefore, the protection scope of the disclosure shall be subject to the protection scope of the appended claims.

## Claims

1. An information exchange method, performed by a first network element or a server terminal, comprising:
transmitting first information to a first terminal, wherein the first information is configured to exchange service information of the first terminal with the first terminal, and the first information is further configured to instruct the first terminal to exchange service information with at least one second terminal, or to instruct the first terminal to transparently forward the service information to at least one second terminal.

2. The information exchange method according to claim 1, wherein the service information comprises at least one of:
a terminal capability;
service auxiliary data;
a service measurement result; or
a service-associated measurement result.

3. The information exchange method according to any one of claims 1 and 2, further comprising:
receiving the service information of the first terminal sent by the first terminal, or providing the service information of the first terminal to the first terminal;
wherein the service information of the first terminal is contained within a first message, and the first message is configured for exchanging the service information of the first terminal.

4. The information exchange method according to claim 3, wherein the first information comprises at least one of:
the first message, wherein the first message is configured for exchanging the service information of the first terminal;
information of the at least one second terminal, wherein second terminal information is configured to describe a second terminal and instruct the first terminal to exchange the service information with the corresponding second terminal;
a second terminal information list, wherein the second terminal information list comprises information of the at least one second terminal;
first indication information, wherein the first indication information is configured to instruct the first terminal to exchange the service information with the at least one second terminal; or
at least one second message, wherein a second message is associated with a second terminal, and the second message is configured for exchanging service information of the second terminal via the first terminal.

5. The information exchange method according to claim 3, wherein the first information comprises at least one of:
the first message, wherein the first message is configured for exchanging the service information of the first terminal;
at least one second message, wherein a second message is associated with a second terminal, and the second message is configured for transparently forwarding service information of the second terminal via the first terminal; or
second indication information, wherein the second indication information is configured to instruct the first terminal to transparently forward the second message.

6. The information exchange method according to any one of claims 4 and 5, further comprising:
receiving the service information of the at least one second terminal sent by the first terminal, wherein the service information of the second terminal is contained within the second message or a third message, the third message is configured for exchanging the service information of the second terminal, and the third message is generated by the first terminal according to the second message.

7. The information exchange method according to any one of claims 1 to 6, wherein transmitting the first information to the first terminal comprises:
receiving second information sent by the first terminal, wherein the second information is configured for requesting an implementation of a service; and
transmitting the first information to the first terminal according to the second information.

8. The information exchange method according to claim 7, wherein the second information comprises at least one of:
service information of the at least one second terminal;
third indication information, wherein the third indication information indicates that the service information of the at least one second terminal has been acquired; or
fourth indication information, wherein the fourth indication information indicates a preferred exchange mode for the service information of a second terminal.

9. The information exchange method according to any one of claims 1 to 8, wherein the first information further comprises at least one of:
the first message, wherein the first message is configured for exchanging the service information of the first terminal;
fifth indication information, wherein the fifth indication information indicates that a second terminal is selected by the first terminal or selected by the first network element;
sixth indication information, wherein the sixth indication information indicates acquiring service information of the second terminal selected by the first terminal; or
seventh indication information, wherein the seventh indication information indicates acquiring service information of the second terminal discovered by the first terminal.

10. The information exchange method according to any one of claims 1 to 9, further comprising any one of:
receiving information of at least one selected second terminal or information of at least one discovered second terminal sent by the first terminal; and
receiving a second terminal information list sent by the first terminal, wherein the second terminal information list comprises information of the at least one selected second terminal or information of at least one discovered second terminal .

11. The information exchange method according to any one of claims 1 to 3, further comprising:
receiving third information sent by the first terminal, wherein the third information contains a second message or a third message, the third message is configured for exchanging service information of a second terminal, and the third message is generated by the first terminal according to the second message; and
transmitting the service information of the second terminal to the first terminal.

12. The information exchange method according to any one of claims 1 to 11, wherein an exchange mode for service information of a second terminal comprises any one of:
a first exchange mode, wherein the first exchange mode is a mode with a request initiated by the first terminal or a mode without transparent forwarding by the first terminal; and
a second exchange mode, wherein the second exchange mode is a mode with a request initiated by the first network element or the server terminal or a mode with transparent forwarding by the first terminal.

13. The information exchange method according to any one of claims 1 to 12, wherein an exchange mode for service information of a second terminal is determined based on at least one of:
indication information from the first terminal;
an exchange capability of the first terminal;
configuration information of the first network element; or
configuration information of the server terminal.

14. The information exchange method according to any one of claims 1 to 13, wherein a first message is configured for exchanging the service information of the first terminal, and a second message is configured for transparently forwarding service information of a second terminal via the first terminal or exchanging the service information of the second terminal via the first terminal;
wherein the first message and the second message satisfy at least one of the following conditions:
second terminal information being contained within the second message or outside the second message;
a message type of the first message and a message type of the second message being the same or different;
the first message and the second message being contained within the same message; or
a first payload container type of the first message and a second payload container type of the second message being the same or different.

15. An information exchange method, performed by a second terminal, comprising:
transmitting fourth information to a first terminal, wherein the fourth information is configured to instruct the first terminal to exchange service information of the second terminal with a first network element or a server terminal, or instruct the first terminal to transparently forward the service information of the second terminal to the first network element or the server terminal.

16. The information exchange method according to claim 15, wherein the service information comprises at least one of:
a terminal capability;
service auxiliary data;
a service measurement result; or
a service-associated measurement result.

17. The information exchange method according to any one of claims 15 and 16, wherein the fourth information comprises at least one of:
second terminal information, wherein the second terminal information is configured to describe the second terminal and instruct the first terminal to exchange the service information of the corresponding second terminal;
first indication information, wherein the first indication information is configured to instruct the first terminal to exchange the service information of the second terminal; or
a second message, wherein the second message is associated with the second terminal, and the second message is configured for exchanging the service information of the second terminal via the first terminal.

18. The information exchange method according to any one of claims 15 and 16, wherein the fourth information comprises at least one of:
second terminal information, wherein the second terminal information is configured to describe the second terminal and instruct the first terminal to transparently forward the service information of the corresponding second terminal;
a second message, wherein the second message is associated with the second terminal, and the second message is configured for transparently forwarding the service information of the second terminal via the first terminal; or
second indication information, wherein the second indication information is configured to instruct the first terminal to transparently forward the second message.

19. The information exchange method according to any one of claims 15 to 18, further comprising:
receiving the service information of the second terminal sent by the first terminal, wherein the service information of the second terminal is contained within a second message or a third message, the third message is configured for exchanging the service information of the second terminal, and the third message is generated by the first terminal according to the second message.

20. The information exchange method according to any one of claims 15 and 16, further comprising:
receiving fifth information sent by the first terminal, wherein the fifth information comprises a second message or a third message.

21. The information exchange method according to any one of claims 15 to 20, further comprising:
providing the service information of the second terminal to the first terminal.

22. An information exchange method, performed by a first terminal, comprising:
receiving first information transmitted by a first network element or a server terminal, wherein the first information is configured to exchange service information of the first terminal with the first terminal, and the first information is further configured to instruct the first terminal to exchange service information with at least one second terminal, or to instruct the first terminal to transparently forward the service information to at least one second terminal.

23. The information exchange method according to claim 22, wherein the service information comprises at least one of:
a terminal capability;
service auxiliary data;
a service measurement result; or
a service-associated measurement result.

24. The information exchange method according to any one of claims 22 and 23, further comprising:
transmitting the service information of the first terminal to the first network element or the server terminal, or receiving the service information of the first terminal transmitted by the first network element or the server terminal;
wherein service information of the first terminal is contained within a first message, and the first message is configured for exchanging the service information of the first terminal.

25. The information exchange method according to claim 24, wherein the first information comprises at least one of:
the first message, wherein the first message is configured for exchanging the service information of the first terminal;
information of at least one second terminal , wherein second terminal information is configured to describe a second terminal and instruct the first terminal to exchange the service information with the corresponding second terminal;
a second terminal information list, wherein the second terminal information list comprises the information of at least one second terminal ;
first indication information, wherein the first indication information is configured to instruct the first terminal to exchange the service information with the at least one second terminal; or
at least one second message, wherein a second message is associated with a second terminal, and the second message is configured for exchanging service information of the second terminal via the first terminal.

26. The information exchange method according to claim 25, further comprising:
generating a third message associated with the second terminal according to the first information, wherein the third message is configured for exchanging the service information of the second terminal; and
transmitting fifth information to the second terminal, wherein the fifth information comprises the third message.

27. The information exchange method according to claim 24, wherein the first information comprises at least one of:
the first message, wherein the first message is configured for exchanging the service information of the first terminal;
at least one second message, wherein a second message is associated with a second terminal, and the second message is configured for transparently forwarding service information of the second terminal via the first terminal; or
second indication information, wherein the second indication information is configured to instruct the first terminal to transparently forward the second message.

28. The information exchange method according to claim 27, further comprising:
transmitting fifth information to the second terminal, wherein the fifth information comprises the second message.

29. The information exchange method according to any one of claims 21 to 28, further comprising:
receiving service information of the second terminal transmitted by the second terminal.

30. The information exchange method according to claim 29, further comprising:
transmitting the service information of the at least one second terminal to the first network element or the server terminal, wherein the service information of the second terminal is contained within a second message or a third message.

31. The information exchange method according to any one of claims 22 to 30, wherein receiving the first information transmitted by the first network element or the server terminal comprises:
transmitting second information to the first network element or the server terminal, wherein the second information is configured for requesting an implementation of a service; and
receiving the first information transmitted by the first network element or the server terminal.

32. The information exchange method according to claim 31, wherein the second information comprises at least one of:
service information of the at least one second terminal;
third indication information, wherein the third indication information indicates that the service information of the at least one second terminal has been acquired; or
fourth indication information, wherein the fourth indication information indicates a preferred exchange mode for the service information of a second terminal.

33. The information exchange method according to any one of claims 22 to 32, wherein the first information further comprises at least one of:
the first message, wherein the first message is configured for exchanging the service information of the first terminal;
fifth indication information, wherein the fifth indication information indicates that a second terminal is selected by the first terminal or selected by the first network element;
sixth indication information, wherein the sixth indication information indicates acquiring service information of the second terminal selected by the first terminal; or
seventh indication information, wherein the seventh indication information indicates acquiring service information of the second terminal discovered by the first terminal.

34. The information exchange method according to any one of claims 22 to 33, further comprising any one of:
transmitting information of at least one selected second terminal or information of at least one discovered second terminal to the first network element or the server terminal; and
transmitting a second terminal information list to the first network element or the server terminal, wherein the second terminal information list comprises information of at least one selected second terminal or at least one piece of discovered second terminal information.

35. An information exchange method, performed by a first terminal, comprising:
receiving fourth information transmitted by a second terminal, wherein the fourth information is configured to instruct the first terminal to exchange service information of the second terminal with a first network element or a server terminal, or instruct the first terminal to transparently forward the service information of the second terminal to the first network element or the server terminal.

36. The information exchange method according to claim 35, wherein the service information comprises at least one of:
a terminal capability;
service auxiliary data;
a service measurement result; or
a service-associated measurement result.

37. The information exchange method according to any one of claims 35 and 36, wherein the fourth information comprises at least one of:
second terminal information, wherein the second terminal information is configured to describe the second terminal and instruct the first terminal to exchange the service information of the corresponding second terminal;
first indication information, wherein the first indication information is configured to instruct the first terminal to exchange the service information of the second terminal; or
a second message, wherein the second message is associated with the second terminal, and the second message is configured for exchanging the service information of the second terminal via the first terminal.

38. The information exchange method according to claim 37, further comprising:
generating a third message associated with the second terminal according to the fourth information, wherein the third message is configured for exchanging the service information of the second terminal;
transmitting third information to the first network element or the server terminal, wherein the third information comprises the third message; and
receiving the service information of the second terminal transmitted by the first network element or the server terminal.

39. The information exchange method according to any one of claims 35 and 36, wherein the fourth information comprises at least one of:
second terminal information, wherein the second terminal information is configured to describe the second terminal and instruct the first terminal to transparently forward the service information of the corresponding second terminal;
a second message, wherein the second message is associated with the second terminal, and the second message is configured for transparently forwarding the service information of the second terminal via the first terminal; or
second indication information, wherein the second indication information is configured to instruct the first terminal to transparently forward the second message.

40. The information exchange method according to claim 39, further comprising:
transmitting third information to the first network element or the server terminal, wherein the third information comprises the second message;
receiving the service information of the second terminal transmitted by the first network element or the server terminal.

41. The information exchange method according to any one of claims 38 and 40, further comprising:
transmitting the service information of the second terminal to the second terminal, wherein the service information of the second terminal is contained within the second message or the third message.

42. The information exchange method according to any one of claims 35 and 36, further comprising:
receiving the service information of the second terminal transmitted by the second terminal, wherein the service information of the second terminal is contained within the second message or the third message.

43. An information exchange method, comprising:
a first network element or a server terminal transmits first information to a first terminal, wherein the first information is configured to exchange service information of the first terminal with the first terminal, and the first information is further configured to instruct the first terminal to exchange service information with at least one second terminal, or to instruct the first terminal to transparently forward the service information to at least one second terminal; and
the first terminal receives the first information transmitted by the first network element or the server terminal.

44. An information exchange method, comprising:
a second terminal transmits fourth information to a first terminal, wherein the fourth information is configured to instruct the first terminal to exchange service information of the second terminal with a first network element or a server terminal, or instruct the first terminal to transparently forward the service information of the second terminal to the first network element or the server terminal; and
the first terminal receives the fourth information transmitted by the second terminal.

45. A first network element, comprising:
a transceiving module configured to transmit first information to a first terminal, wherein the first information is configured to exchange service information of the first terminal with the first terminal, and the first information is further configured to instruct the first terminal to exchange service information with at least one second terminal, or to instruct the first terminal to transparently forward the service information to at least one second terminal.

46. A terminal, comprising a transceiving module configured to:
transmit first information to a first terminal, wherein the first information is configured to exchange service information of the first terminal with the first terminal, and the first information is further configured to instruct the first terminal to exchange service information with at least one second terminal, or to instruct the first terminal to transparently forward the service information to at least one second terminal; or
transmit fourth information to a first terminal, wherein the fourth information is configured to instruct the first terminal to exchange service information of a second terminal with a first network element or a server terminal, or instruct the first terminal to transparently forward the service information of the second terminal to the first network element or the server terminal; or
receive the first information transmitted by the first network element or the server terminal; or
receive the fourth information transmitted by the second terminal.

47. A communication device, comprising:
one or more processors,
wherein the one or more processors are configured to perform the information exchange method according to any one of claims 1 to 44.

48. A storage medium storing instructions, wherein when the instructions are run on a communication device, the instructions cause the communication device to perform the information exchange method according to any one of claims 1 to 44.
